# FASCICULE DE BREVET EUROPEEN

(11) **EP 3 674 646 B1**
(45) Date de publication et mention de la délivrance du brevet: **18.08.2021**
(21) Numéro de dépôt: 19219866.1
(22) Date de dépôt: 27.12.2019
(51) Int. Cl.: F28D 20/00

(54) **SYSTÈME DE STOCKAGE/LIBÉRATION THERMOCHIMIQUE D'ÉNERGIE À AIR HUMIDE À TEMPÉRATURE THERMODYNAMIQUE DE DÉSHYDRATATION ABAISSÉE PAR UN DISPOSITIF DE DESHUMIDIFICATION**
SYSTEM ZUR THERMOCHEMISCHEN SPEICHERUNG/FREISETZUNG VON ENERGIE MIT FEUCHTER LUFT BEI EINER THERMODYNAMISCHEN DEHYDRATISIERUNGSTEMPERATUR, DIE DURCH EINE ENTFEUCHTUNGSVORRICHTUNG HERABGESETZT IST
SYSTEM FOR THERMOCHEMICAL STORAGE/RELEASE OF ENERGY WITH WET AIR AT A THERMODYNAMIC DEHYDRATION TEMPERATURE LOWERED BY A DEHUMIDIFICATION DEVICE

(30) Priorité: 31.12.2018 FR 1874412; 31.12.2018 FR 1874411
(43) Date de publication de la demande: 01.07.2020
(73) Titulaire: Commissariat à l'énergie atomique et aux énergies alternatives, 75015 Paris (FR)
(72) Inventeur: WYTTENBACH, Joël, 38054 GRENOBLE CEDEX 09 (FR); BRUYAT, Fabien, 38054 GRENOBLE CEDEX 09 (FR); JOUBERT, Romain, 38054 GRENOBLE CEDEX 09 (FR)
(74) Mandataire: Brevalex

(56) Documents cités:
- EP-A1- 3 061 799
- CA-A- 1 158 121
- DE-A1-102006 050 270
- FR-A1- 3 000 539
- FR-A1- 3 003 867
- US-A- 4 262 739

## Description

### DOMAINE TECHNIQUE

La présente invention se rapporte au domaine des réacteurs thermochimiques à air humide.

Un réacteur thermochimique permet de faire réagir au moins deux réactifs, tour à tour pour les associer de manière exothermique, et pour les dissocier de manière endothermique.

Particulièrement, ce type de réacteur est utilisé pour stocker la chaleur de manière dense et sur de longues durées. Une application importante mais non limitative consiste à utiliser la chaleur solaire pour dissocier les réactifs puis à chauffer un bâtiment en les réassociant. Ces deux opérations peuvent être séparées par un intervalle de temps important. Il est en particulier possible d'utiliser cette technologie pour réaliser un stockage de chaleur intersaisonnier.

Le domaine de la présente invention se limite au domaine des réacteurs thermochimiques à air humide, c'est-à-dire dans lesquels un flux d'air est utilisé en tant que fluide caloporteur assurant les échanges thermiques entre les réactifs et le milieu extérieur, et dans lesquels l'un des réactifs est de l'eau sous forme de vapeur contenue dans le flux d'air.

L'invention concerne en particulier, mais non exclusivement, les réacteurs dans lesquels l'un des réactifs, solide, est stocké, tandis que l'eau constituant l'autre réactif, gazeux, ne l'est pas et est prélevée dans l'air atmosphérique. De tels réacteurs thermochimiques fonctionnent ainsi en système ouvert au regard du réactif gazeux.

La réaction thermochimique opérée dans un tel système est une réaction de sorption de nature chimique et/ou physique.

### ÉTAT DE LA TECHNIQUE ANTÉRIEURE

De l'état de la technique, il est connu un système de stockage/libération thermochimique d'énergie à air humide, conçu pour fonctionner alternativement dans un mode de stockage d'énergie et dans un mode de libération d'énergie, et comprenant un réacteur thermochimique, un dispositif de captation d'énergie thermique extérieur au réacteur thermochimique, et un système de diffusion de chaleur extérieur au réacteur thermochimique, dans lequel le réacteur thermochimique comprend : une enceinte comportant une entrée d'air pour admettre un flux d'air dans l'enceinte et une sortie d'air pour rejeter le flux d'air hors de l'enceinte ; un lit de matériau réactif agencé dans l'enceinte et configuré pour être déshydraté de manière endothermique pour stocker de l'énergie, dans le mode de stockage d'énergie, et pour être hydraté de manière exothermique pour libérer l'énergie préalablement stockée, dans le mode de libération d'énergie ; un premier dispositif de transfert d'énergie agencé dans l'enceinte et configuré pour fournir de l'énergie thermique au lit de matériau réactif à partir d'énergie fournie par le dispositif de captation d'énergie thermique, dans le mode de stockage d'énergie ; et un deuxième dispositif de transfert d'énergie agencé dans l'enceinte et configuré pour transférer de l'énergie thermique du flux d'air au système de diffusion de chaleur, dans le mode de libération d'énergie.

Les réactions de déshydratation thermochimiques sont liées à des équilibres entre température et humidité. En conditions chaudes et sèches, le matériau réactif solide va stocker de l'énergie en se déshydratant, tandis qu'il va en céder en conditions froides et humides, en s'hydratant.

La température de déshydratation dans le mode de stockage d'énergie est un enjeu important pour l'efficacité du système : si le matériau peut se déshydrater pour stocker l'énergie à plus faible température, le système sera plus performant et moins coûteux.

En effet, les pertes thermiques augmentent en général avec l'écart de température par rapport à la température ambiante.

D'autre part, la température de déshydratation contraint le choix de tous les composants concernés par cette température. Il est donc plus facile et moins coûteux d'approvisionner des composants dont la limite haute de température est plus basse. Notamment, le document CA 1 158 121 A décrit un système de stockage/libération thermochimique d'énergie à air humide, conçu pour fonctionner alternativement dans un mode de stockage d'énergie thermique et dans un mode de libération d'énergie thermique, et comprenant un réacteur thermochimique, un dispositif de captation d'énergie thermique extérieur au réacteur thermochimique, et un système de diffusion de chaleur extérieur au réacteur thermochimique,dans lequel le réacteur thermochimique comprend :- une enceinte comportant une entrée d'air pour admettre un flux d'air dans l'enceinte et une sortie d'air pour rejeter le flux d'air hors de l'enceinte ;- un lit de matériau réactif agencé dans l'enceinte et configuré pour être déshydraté de manière endothermique pour stocker de l'énergie thermique, dans le mode de stockage d'énergie, et pour être hydraté de manière exothermique pour libérer l'énergie thermique préalablement stockée, dans le mode de libération d'énergie ;- un premier dispositif de transfert d'énergie agencé dans l'enceinte; et- un deuxième dispositif de transfert d'énergie agencé dans l'enceinte et configuré pour transférer de l'énergie thermique du flux d'air au système de diffusion de chaleur, dans le mode de libération d'énergie.

Il existe donc un besoin pour un système de stockage/libération thermochimique d'énergie à air humide capable d'opérer la déshydratation du réactif solide à une température plus basse que les systèmes connus.

### EXPOSÉ DE L'INVENTION

L'invention propose à cet effet un système de stockage/libération thermochimique d'énergie à air humide du type décrit ci-dessus, comprenant en outre un dispositif de déshumidification configuré pour fonctionner dans le mode de stockage d'énergie en abaissant une teneur en vapeur d'eau du flux d'air avant passage de ce dernier au travers du lit de matériau réactif, et pour être hors service dans le mode de libération d'énergie.

Un tel système permet un abaissement de la température à laquelle s'opère la déshydratation du matériau réactif. En effet, le dispositif de déshumidification permet d'abaisser le degré d'humidité de l'air avant mise en contact de cet air avec le lit de matériau réactif, ce qui conduit à un abaissement de la température thermodynamique de déshydratation du matériau réactif. Ce principe est valable aussi bien dans le cadre de réactions de sorption physique que dans le cadre de réactions de sorption chimique.

Dans des modes de réalisation préférés de l'invention, le dispositif de déshumidification est un déshumidificateur d'air séparé de l'enceinte du réacteur thermochimique et est configuré pour fonctionner dans le mode de stockage d'énergie en déshumidifiant le flux d'air avant admission de ce dernier dans l'enceinte par l'entrée d'air de l'enceinte.

Dans un premier mode de réalisation de l'invention, le système comprend en outre un local dans lequel sont logés le réacteur thermochimique et le déshumidificateur d'air constituant le dispositif de déshumidification, et dans lequel débouche l'entrée d'air de l'enceinte, le local comprenant une admission d'air débouchant dans un milieu extérieur, et le déshumidificateur d'air étant configuré pour déshumidifier de l'air provenant de l'admission d'air du local avant admission dudit air dans l'enceinte du réacteur thermochimique par l'entrée d'air de l'enceinte, dans le mode de stockage d'énergie.

De préférence, le système comprend en outre une canalisation d'échappement raccordant directement la sortie de l'enceinte du réacteur thermochimique au milieu extérieur.

Dans un deuxième mode de réalisation de l'invention, le système comprend une première canalisation raccordant une sortie d'air du déshumidificateur d'air constituant le dispositif de déshumidification à l'entrée d'air de l'enceinte du réacteur thermochimique, une deuxième canalisation raccordant la sortie d'air de l'enceinte à une entrée d'air du déshumidificateur d'air, une troisième canalisation qui raccorde l'entrée d'air de l'enceinte à un milieu extérieur, une quatrième canalisation qui raccorde la sortie d'air de l'enceinte au milieu extérieur, et un dispositif de commutation aéraulique configuré pour autoriser une circulation d'air dans les première et deuxième canalisations et empêcher une circulation d'air dans les troisième et quatrième canalisations dans le mode de stockage d'énergie, et configuré pour autoriser une circulation d'air dans les troisième et quatrième canalisations et empêcher une circulation d'air dans les première et deuxième canalisations dans le mode de libération d'énergie.

Par ailleurs, le système comprend en outre avantageusement un capteur solaire photovoltaïque alimentant électriquement le déshumidificateur d'air constituant le dispositif de déshumidification, dans le mode de stockage d'énergie.

Dans un troisième mode de réalisation de l'invention, le système comprend une canalisation de retour raccordant la sortie d'air de l'enceinte à l'entrée d'air de l'enceinte du réacteur thermochimique, une canalisation d'entrée qui raccorde l'entrée d'air de l'enceinte à un milieu extérieur, une canalisation de sortie qui raccorde la sortie d'air de l'enceinte au milieu extérieur, et un dispositif de commutation aéraulique configuré pour autoriser une circulation d'air en boucle dans l'enceinte et la canalisation de retour et empêcher une circulation d'air dans la canalisation d'entrée et la canalisation de sortie dans le mode de stockage d'énergie, et configuré pour autoriser une circulation d'air dans la canalisation d'entrée et la canalisation de sortie et empêcher une circulation d'air dans la canalisation de retour dans le mode de libération d'énergie.

Le système selon le troisième mode de réalisation comprend en outre, raccordés en série de manière à mettre en œuvre un cycle frigorifique : un compresseur alimenté en énergie électrique par le dispositif de captation d'énergie thermique; un échangeur-condenseur agencé dans l'enceinte du réacteur thermochimique entre l'entrée d'air de l'enceinte et le lit de matériau réactif et constituant le premier dispositif de transfert d'énergie ; un échangeur-évaporateur agencé dans l'enceinte du réacteur thermochimique entre le deuxième dispositif de transfert d'énergie et la sortie d'air de l'enceinte et constituant ledit dispositif de déshumidification ; et un détendeur.

Le système selon le troisième mode de réalisation comprend en outre un dispositif d'évacuation d'eau configuré pour permettre que de l'eau liquide, formée par condensation de vapeur d'eau du flux d'air au contact de l'échangeur-évaporateur, quitte l'enceinte.

L'invention concerne également un procédé de mise en œuvre d'un système du type décrit ci-dessus, le procédé comprenant au moins une phase de stockage d'énergie comprenant au moins des étapes de :
A) abaissement d'une teneur en vapeur d'eau d'un flux d'air au moyen du dispositif de déshumidification ; puis
C) apport d'énergie thermique au lit de matériau réactif à partir d'énergie fournie par le dispositif de captation d'énergie thermique au moyen du premier dispositif de transfert d'énergie, et passage du flux d'air au travers du lit de matériau réactif, de sorte que s'opère une réaction endothermique réversible de déshydratation du matériau réactif, aboutissant à un enrichissement du flux d'air en vapeur d'eau.

Dans des modes de réalisation préférés de l'invention, le dispositif de déshumidification est un déshumidificateur d'air séparé de l'enceinte du réacteur thermochimique, le procédé comprenant une étape B d'admission du flux d'air dans l'enceinte du réacteur thermochimique par l'entrée d'air de l'enceinte après l'étape A et avant l'étape C, et le procédé comprenant, après l'étape C, une étape D de rejet du flux d'air hors de l'enceinte du réacteur thermochimique par la sortie d'air de l'enceinte.

Dans le premier mode de réalisation de l'invention, le flux d'air est admis par une entrée d'air du déshumidificateur d'air directement à partir du local, et le flux d'air est rejeté par une sortie d'air du déshumidificateur d'air directement dans le local, au cours de l'étape A, et le flux d'air est admis par l'entrée d'air de l'enceinte du réacteur thermochimique directement à partir du local, au cours de l'étape B.

De préférence, le flux d'air est rejeté hors de l'enceinte du réacteur thermochimique directement dans le milieu extérieur, au cours de l'étape D.

Dans le deuxième mode de réalisation de l'invention, le flux d'air passé dans le déshumidificateur d'air à l'étape A est rejeté dans la première canalisation raccordée à l'entrée d'air de l'enceinte du réacteur thermochimique par laquelle le flux d'air est admis dans l'enceinte du réacteur thermochimique, à l'étape B, et l'étape D comprend le rejet du flux d'air à partir de la sortie d'air de l'enceinte du réacteur thermochimique dans la deuxième canalisation raccordée à une entrée d'air du déshumidificateur d'air par laquelle le flux d'air est admis dans le déshumidificateur d'air, à l'étape A.

De préférence, le dispositif de déshumidification est alimenté en énergie électrique à partir d'un capteur solaire photovoltaïque.

Dans le troisième mode de réalisation de l'invention, l'étape A est mise en œuvre par condensation de vapeur d'eau du flux d'air sur l'échangeur-évaporateur, et l'étape C comporte un transfert de chaleur au flux d'air à partir de l'échangeur-condenseur puis un transfert de chaleur du flux d'air au lit de matériau réactif.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
la figure 1 est une vue schématique en coupe d'un système de stockage/libération thermochimique d'énergie à air humide selon un premier mode de réalisation préféré de l'invention ;
la figure 2 est une vue semblable à la figure 1, illustrant une variante du système de stockage/libération thermochimique d'énergie à air humide selon le premier mode de réalisation préféré de l'invention ;
la figure 3 est une vue semblable à la figure 1, illustrant une autre variante du système de stockage/libération thermochimique d'énergie à air humide selon le premier mode de réalisation préféré de l'invention ;
la figure 4 est une vue schématique en coupe d'un système de stockage/libération thermochimique d'énergie à air humide selon un deuxième mode de réalisation préféré de l'invention, illustré en mode de stockage d'énergie ;
la figure 5 est une vue semblable à la figure 4, illustrant le système de stockage/libération thermochimique d'énergie à air humide selon un deuxième mode de réalisation préféré de l'invention en mode de libération d'énergie ;
la figure 6 est une vue semblable à la figure 4, illustrant une variante du système de stockage/libération thermochimique d'énergie à air humide selon le deuxième mode de réalisation préféré de l'invention ;
la figure 7 est une vue schématique en coupe d'un système de stockage/libération thermochimique d'énergie à air humide selon un troisième mode de réalisation préféré de l'invention ;
la figure 8 est un diagramme schématique d'un procédé de stockage d'énergie au moyen d'un système de stockage/libération thermochimique d'énergie à air humide selon l'invention ;
la figure 9 est un diagramme schématique d'un procédé de libération d'énergie au moyen d'un système de stockage/libération thermochimique d'énergie à air humide selon l'invention.

Dans l'ensemble de ces figures, des références identiques peuvent désigner des éléments identiques ou analogues.

### EXPOSÉ DÉTAILLÉ DE MODES DE RÉALISATION PRÉFÉRÉS

La présente invention concerne de manière générale un système de stockage/libération thermochimique d'énergie à air humide, conçu pour fonctionner alternativement dans un mode de stockage d'énergie thermique et dans un mode de libération d'énergie thermique.

Une application majeure d'un tel système est le stockage de l'énergie solaire quand elle est abondante, dans le but de chauffer ultérieurement un bâtiment, quand l'énergie solaire n'est plus suffisamment disponible.

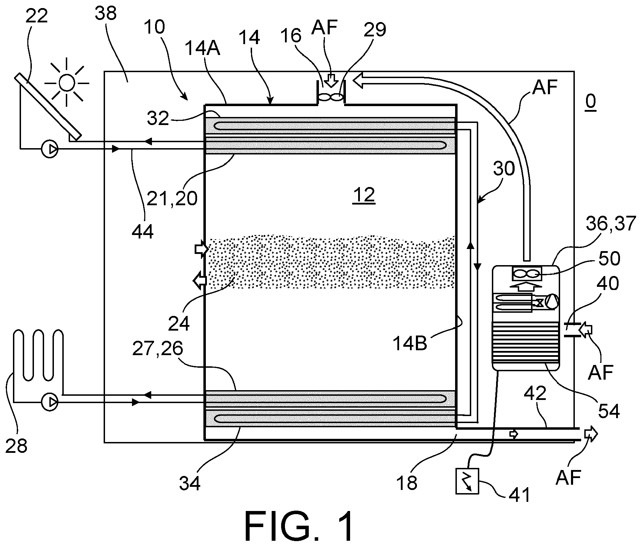

En référence à la figure 1, un tel système 10 comporte un réacteur thermochimique 12 comprenant une enceinte 14.

L'enceinte 14 comporte une entrée d'air 16 pour admettre un flux d'air AF dans l'enceinte 14, et une sortie d'air 18 pour rejeter le flux d'air AF hors de l'enceinte 14.

L'enceinte 14 est par exemple de forme générale parallélépipédique. L'entrée d'air 16 est par exemple formée au centre d'une paroi supérieure 14A de l'enceinte. La sortie d'air 18 est par exemple formée à l'extrémité inférieure d'une paroi latérale 14B de l'enceinte.

Dans le premier mode de réalisation de l'invention illustré sur la figure 1, le réacteur thermochimique 12 comprend, logés dans l'enceinte 14 et dans cet ordre depuis l'entrée d'air 16 de l'enceinte vers la sortie d'air 18 de l'enceinte :
- un premier échangeur thermique 20 configuré pour transférer de l'énergie thermique au flux d'air AF à partir d'un dispositif de captation d'énergie thermique 22 extérieur à l'enceinte 14, dans le mode de stockage d'énergie ;
- un lit de matériau réactif 24 apte à être déshydraté de manière endothermique au contact du flux d'air AF pour stocker de l'énergie thermique, dans le mode de stockage d'énergie, et à être hydraté de manière exothermique au contact du flux d'air AF pour libérer l'énergie thermique préalablement stockée, dans le mode de libération d'énergie ; et
- un deuxième échangeur thermique 26 configuré pour transférer de l'énergie thermique depuis le flux d'air AF à un système de diffusion de chaleur 28 extérieur à l'enceinte 14, dans le mode de libération d'énergie.

Le système 10 étant dans ce cas un système ouvert, l'entrée d'air 16 de l'enceinte et la sortie d'air 18 de l'enceinte communiquent chacune au moins indirectement avec un milieu extérieur O, au moins dans le mode de libération d'énergie, comme cela apparaîtra plus clairement dans ce qui suit. Le système 10 est ainsi un système ouvert à air humide à pression atmosphérique. Par pression atmosphérique, il faut comprendre ici une pression comprise entre 700 hPa et 1300 hPa.

Le premier échangeur thermique 20 permet de chauffer le flux d'air AF dans le mode de stockage d'énergie, à partir d'énergie captée par le dispositif de captation d'énergie thermique 22, typiquement de l'énergie solaire comme cela apparaîtra plus clairement dans ce qui suit, de sorte que le flux d'air AF chauffé transfère ensuite de la chaleur au lit de matériau réactif 24 et permette ainsi la mise en œuvre de la réaction endothermique de déshydratation du matériau réactif.

Le premier échangeur thermique 20 constitue ainsi, dans la terminologie de la présente description, un exemple de premier dispositif de transfert d'énergie 21 agencé dans l'enceinte 14 et configuré pour fournir de l'énergie thermique au lit de matériau réactif 24 à partir d'énergie fournie par le dispositif de captation d'énergie thermique 22.

Le lit de matériau réactif 24 comprend typiquement un matériau réactif poreux ou dispersé, apte à être traversé par le flux d'air AF.

Le lit de matériau réactif 24 peut, par exemple, être un lit fixe mono-étagé ou multi-étagé, un lit continuellement mobile transporté ou agité (vibrant) ou fluidisé (par le flux d'air), ou encore un lit semi mobile fonctionnant par lot (avec remplissage et vidange complète à chaque cycle) ou fonctionnant de manière semi-continue (remplissage et vidange partiels à chaque cycle).

Le deuxième échangeur thermique 26 permet, dans le mode de libération d'énergie, de transférer de l'énergie thermique depuis le flux d'air AF (qui a été préalablement chauffé au contact du lit de matériau réactif 24 alors sujet à la réaction exothermique d'hydratation) à un système de diffusion de chaleur 28, typiquement un réseau de chauffage central comprenant un ou plusieurs radiateur(s) ou plancher(s) chauffant(s). Dans ce cas, le deuxième échangeur thermique 26 est de préférence un échangeur air/liquide, par exemple un échangeur air/eau. En variante, le deuxième échangeur thermique 26 peut par exemple être un échangeur air/air.

Le deuxième échangeur thermique 26 constitue ainsi, dans la terminologie de la présente description, un exemple de deuxième dispositif de transfert d'énergie 27 agencé dans l'enceinte 14 et configuré pour transférer de l'énergie thermique du flux d'air AF au système de diffusion de chaleur 28.

Le système comporte de préférence un ventilateur 29 pour induire une circulation forcée du flux d'air AF dans les deux modes de fonctionnement du système. À cet effet, le ventilateur 29 est avantageusement agencé dans l'entrée d'air 16 de l'enceinte 14.

Le système comporte en outre de préférence un dispositif de récupération de chaleur 30, comprenant un troisième échangeur thermique 32 agencé entre l'entrée d'air 16 et le lit de matériau réactif 24, préférentiellement entre l'entrée d'air 16 et le premier échangeur thermique 20, ainsi qu'un quatrième échangeur thermique 34 agencé entre la sortie d'air 18 et le lit de matériau réactif 24, préférentiellement entre la sortie d'air 18 et le deuxième échangeur thermique 26. Le troisième échangeur thermique 32 et le quatrième échangeur thermique 34 sont des échangeurs air/liquide, par exemple des échangeurs air/eau, dont les circuits hydrauliques respectifs sont par exemple reliés entre eux de manière à former un circuit fermé de thermosiphon. En variante, le dispositif de récupération de chaleur 30 peut comporter une pompe pour induire une circulation forcée du liquide au sein du troisième échangeur thermique 32 et du quatrième échangeur thermique 34.

Le dispositif de récupération de chaleur 30 permet de récupérer de la chaleur du flux d'air AF non préalablement transmise au deuxième échangeur thermique 26 (dans le mode de libération d'énergie) ou non préalablement transmise au lit de matériau réactif 24 (dans le mode de stockage d'énergie), puis d'utiliser ladite chaleur pour préchauffer le flux d'air AF admis par l'entrée d'air 16 avant son passage au travers du lit de matériau réactif 24. Un tel préchauffage permet d'améliorer l'efficacité des réactions d'hydratation et de déshydratation opérées au niveau du lit de matériau réactif 24.

Dans le cas où les deuxième, troisième et quatrième échangeurs thermiques 26, 32, 34 sont tous de type air/liquide, ceux-ci présentent avantageusement des sections semblables, correspondant chacune à une section intérieure de l'enceinte 14. Il en est de même en ce qui concerne le premier échangeur thermique 20 dans le cas où ce dernier est également de type air/liquide, comme cela apparaîtra plus clairement dans ce qui suit.

Selon l'invention, le système 10 comprend en outre un dispositif de déshumidification 36 configuré pour fonctionner dans le mode de stockage d'énergie, en abaissant une teneur en vapeur d'eau du flux d'air AF avant passage de ce dernier au travers du lit de matériau réactif 24, et pour être hors service dans le mode de libération d'énergie.

Le dispositif de déshumidification 36 permet un abaissement de la température thermodynamique de déshydratation du réactif solide, en abaissant le degré d'humidité du flux d'air AF avant sa mise en contact avec le lit de matériau réactif 24. Cela est valable aussi bien dans le cadre de réactions de sorption physique que dans le cadre de réactions de sorption chimique.

Dans le premier mode de réalisation de l'invention, le dispositif de déshumidification 36 est un déshumidificateur d'air 37 séparé de l'enceinte 14 et configuré pour déshumidifier le flux d'air AF avant admission de ce dernier dans l'enceinte 14 par l'entrée d'air 16, dans le mode de stockage d'énergie. Le déshumidificateur d'air 37 permet ainsi d'abaisser le degré d'humidité du flux d'air AF admis dans l'enceinte 14 par l'entrée d'air 16. Par « déshumidificateur d'air », il faut comprendre une unité autonome, typiquement alimentée par de l'énergie électrique, et par exemple du type disponible dans le commerce sous la forme d'unité mobile pour la déshumidification des logements.

Le déshumidificateur d'air 37 est par exemple du type mettant en œuvre un cycle frigorifique.

Le principe thermodynamique de fonctionnement d'un tel déshumidificateur d'air consiste à refroidir l'air pour condenser l'eau qu'il contient au contact d'un échangeur-évaporateur, avant de réchauffer cet air au contact d'un échangeur-condenseur et de l'évacuer. L'humidité en sortie est fonction de la température basse atteinte dans le déshumidificateur d'air, et cette température basse est naturellement influencée par la température d'air en entrée.

Le déshumidificateur d'air 37 peut notamment, en variante, être du type mettant en œuvre un effet thermoélectrique.

Le fait que le déshumidificateur d'air 37 soit séparé de l'enceinte 14, et soit donc en particulier agencé à l'extérieur de l'enceinte 14, permet une déshumidification de l'air à température modérée, alors même que la déshydratation se fait simultanément à une température plus élevée au sein de l'enceinte 14. La mise en œuvre du déshumidificateur d'air 37 à une température modérée permet en général un fonctionnement optimal de ce type de dispositif, en particulier dans le cas où le déshumidificateur d'air 37 est du type mettant en œuvre un cycle frigorifique.

Dans le premier mode de réalisation préféré de l'invention illustré sur la figure 1, le système 10 comprend en outre un local 38 dans lequel sont logés le réacteur thermochimique 12 et le déshumidificateur d'air 37.

Le local 38 comprend une admission d'air 40 débouchant dans le milieu extérieur O, et permettant ainsi l'admission du flux d'air AF dans le local 38 à partir du milieu extérieur O.

L'entrée d'air 16 de l'enceinte 14 débouche dans le local 38, de préférence à distance de l'admission d'air 40.

De plus, le déshumidificateur d'air 37 est configuré pour déshumidifier le flux d'air AF provenant de l'admission d'air 40 du local 38 avant admission de ce flux d'air AF dans l'enceinte 14 par l'entrée d'air 16 de l'enceinte, dans le mode de stockage d'énergie.

À cet effet, le déshumidificateur d'air 37 est globalement interposé entre l'admission d'air 40 du local 38 et l'entrée d'air 16 de l'enceinte 14. Il faut comprendre par-là que, bien que de l'air puisse contourner le déshumidificateur d'air 37 pour aller directement de l'admission d'air 40 du local 38 à l'entrée d'air 16 de l'enceinte, le déshumidificateur d'air 37 comporte en général un ventilateur, ou un moyen analogue, dont le fonctionnement permet de maximiser le passage de l'air dans le déshumidificateur d'air 37 et de minimiser la quantité d'air susceptible d'atteindre l'entrée d'air 16 de l'enceinte sans être passé au travers du déshumidificateur d'air 37.

À cet égard, le déshumidificateur d'air 37 est agencé de préférence à proximité de l'admission d'air 40 du local 38, en étant orienté de sorte qu'une entrée d'air 54 du déshumidificateur d'air 37 soit sensiblement en regard de l'admission d'air 40 du local 38 tandis qu'une sortie d'air 50 du déshumidificateur d'air 37 soit sensiblement orientée vers l'entrée d'air 16 de l'enceinte.

Dans le premier mode de réalisation préféré de l'invention, le déshumidificateur d'air 37 n'est donc pas directement raccordé à l'enceinte 14 du réacteur thermochimique 12.

Ceci présente les avantages suivants.

D'une part, des déshumidificateurs d'air compacts sont disponibles à coût bien plus bas que ne le serait un dispositif spécifique intégré.

D'autre part, désolidariser le déshumidificateur d'air 37 et l'enceinte 14 permet de simplifier le choix du déshumidificateur d'air 37, et d'éviter les complications découlant d'un raccordement de ces éléments, comme la nécessité d'accorder les débits respectifs des différents dispositifs du système.

De plus, le déshumidificateur d'air 37 est plus facile à remplacer en cas de problème, s'il n'est pas raccordé à l'enceinte.

Enfin, le non raccordement du déshumidificateur d'air 37 à l'enceinte 14 permet que l'air admis dans le déshumidificateur d'air soit de l'air sensiblement à température ambiante, ce qui permet un fonctionnement optimal du déshumidificateur d'air, comme expliqué ci-dessus.

Le fonctionnement du déshumidificateur d'air 37 engendre une consommation électrique supplémentaire, qui entraîne en théorie une réduction du coefficient de performance du système. Cependant, dans les cas d'application au stockage d'énergie inter-saisonnier notamment, la puissance électrique correspondante est exclusivement soutirée lorsque le système fonctionne en mode de stockage d'énergie, et donc dans une période où la ressource solaire est en général disponible. L'énergie électrique nécessaire au fonctionnement du déshumidificateur d'air 37 peut donc être facilement produite par un capteur solaire photovoltaïque 41, de sorte qu'il est possible de ne pas tenir compte de cette consommation d'énergie dans les calculs de rendement énergétique du système.

De plus, le déshumidificateur d'air 37 n'étant pas solidaire de l'enceinte 14, il est possible d'adapter les dimensions du déshumidificateur d'air, qui dépendent en général de la puissance de ce dernier, en fonction de la puissance photovoltaïque disponible pour l'alimenter.

Par ailleurs, le système 10 comprend en outre avantageusement une canalisation d'échappement 42 raccordant directement la sortie d'air 18 de l'enceinte au milieu extérieur O. Ainsi, le flux d'air AF est évacué par la canalisation d'échappement 42 directement dans le milieu extérieur O, ce qui permet de prévenir tout risque de contamination du local 38 par des composés qui seraient accidentellement présents dans le flux d'air AF.

Dans l'exemple illustré sur la figure 1, le dispositif de captation d'énergie thermique 22, qui est raccordé au premier échangeur thermique 20, est un capteur solaire thermique ou un ensemble de tels capteurs. Il faut comprendre, par capteur solaire thermique, un capteur configuré pour exposer un liquide caloporteur, tel que de l'eau, au rayonnement solaire, afin de chauffer le liquide caloporteur.

Dans ce cas, le premier échangeur thermique 20 est un échangeur air/liquide, par exemple air/eau, qui est donc raccordé par un circuit hydraulique 44 au dispositif de captation d'énergie thermique 22.

Le fonctionnement du système 10 va maintenant être décrit.

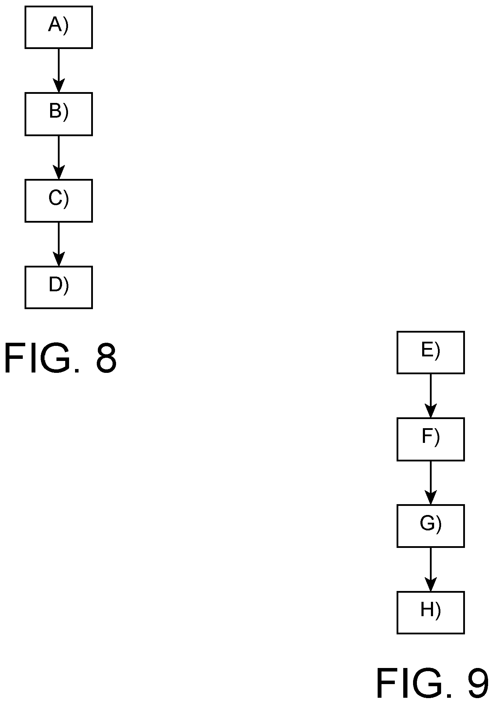

En référence à la figure 8, un procédé de mise en œuvre du système 10 comprend au moins une phase de stockage d'énergie comprenant au moins des étapes de :
A) abaissement de la teneur en vapeur d'eau du flux d'air AF au moyen du dispositif de déshumidification 36 ; puis
C) apport d'énergie thermique au lit de matériau réactif 24 à partir d'énergie fournie par le dispositif de captation d'énergie thermique 22 au moyen du premier dispositif de transfert d'énergie 20, et passage du flux d'air AF au travers du lit de matériau réactif 24, de sorte que s'opère une réaction endothermique réversible de déshydratation du matériau réactif, aboutissant à un enrichissement du flux d'air AF en vapeur d'eau.

Plus précisément, dans le premier mode de réalisation de l'invention décrit ci-dessus, le procédé comporte en outre une étape B d'admission du flux d'air AF dans l'enceinte 14 du réacteur thermochimique par l'entrée d'air 16 de l'enceinte, mise en œuvre après l'étape A et avant l'étape C.

De plus, l'étape C est mise en œuvre moyennant un transfert de chaleur au flux d'air AF à partir du dispositif de captation d'énergie thermique 22 au moyen du premier échangeur thermique 20, puis un transfert de chaleur du flux d'air AF au lit de matériau réactif 24 lors du passage du flux d'air AF au travers du lit de matériau réactif 24.

Enfin, le procédé comporte dans ce cas une étape D de rejet du flux d'air AF hors de l'enceinte 14 du réacteur thermochimique par la sortie d'air 18 de l'enceinte.

Par ailleurs, dans le premier mode de réalisation de l'invention, le flux d'air AF est admis dans l'entrée d'air 54 du déshumidificateur d'air 37 directement à partir du local 38, et le flux d'air AF est rejeté par la sortie d'air 50 du déshumidificateur d'air 37 directement dans le local 38, au cours de l'étape A. En outre, le flux d'air AF est admis dans l'enceinte 14 du réacteur thermochimique directement à partir du local 38, au cours de l'étape B. Enfin, le flux d'air AF est rejeté hors de l'enceinte 14 du réacteur thermochimique directement dans le milieu extérieur O, au cours de l'étape D, par la canalisation d'échappement 42.

Dans le cas où le système 10 comporte le dispositif de récupération de chaleur 30, le flux d'air AF est en outre préchauffé lors de son passage au travers du troisième échangeur thermique 32, entre l'étape B et l'étape C, et le flux d'air AF transfère de la chaleur au dispositif de récupération de chaleur 30 lors de son passage au travers du quatrième échangeur thermique 34, entre l'étape C et l'étape D.

En référence à la figure 9, le procédé de mise en œuvre du système 10 comprend en outre une phase de libération d'énergie comprenant au moins des étapes de :
E) admission du flux d'air AF dans l'enceinte 14 du réacteur thermochimique par l'entrée d'air 16 de l'enceinte ; puis
F) passage du flux d'air AF au travers du lit de matériau réactif 24, dans lequel s'opère une réaction exothermique réversible d'hydratation du matériau réactif à partir de vapeur d'eau contenue dans le flux d'air AF, et transfert de chaleur au flux d'air à partir du lit de matériau réactif 24 ; puis
G) transfert de chaleur du flux d'air AF au système de diffusion de chaleur 28 par passage du flux d'air AF au travers du deuxième échangeur thermique 26 ; puis
H) rejet du flux d'air AF hors de l'enceinte 14 du réacteur thermochimique par la sortie d'air 18 de l'enceinte.

Dans le cas où le système 10 comporte le dispositif de récupération de chaleur 30, le flux d'air AF est en outre préchauffé lors de son passage au travers du troisième échangeur thermique 32, entre l'étape E et l'étape F, et le flux d'air AF transfère de la chaleur au dispositif de récupération de chaleur 30 lors de son passage au travers du quatrième échangeur thermique 34, entre l'étape G et l'étape H.

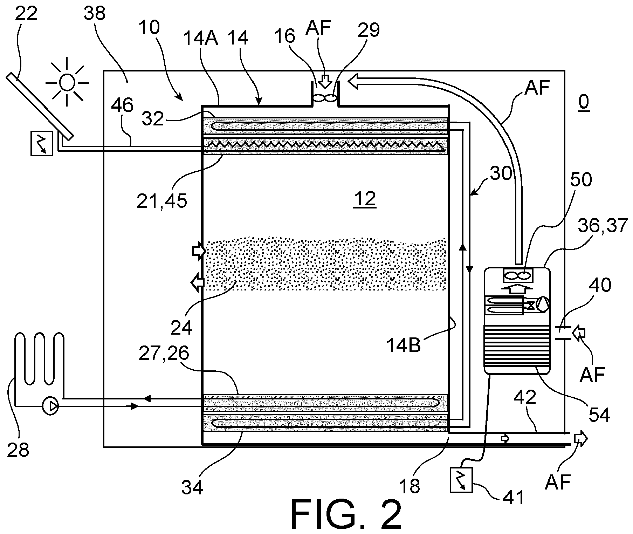

Dans une variante du système 10 illustrée sur la figure 2, le dispositif de captation d'énergie thermique 22, qui est raccordé au premier dispositif de transfert d'énergie 21, est un capteur solaire photovoltaïque ou un ensemble de tels capteurs.

Dans ce cas, le premier dispositif de transfert d'énergie 21 est un dispositif de chauffage par effet joule alimenté électriquement par un circuit électrique 46 raccordé au dispositif de captation d'énergie thermique 22, pour produire de la chaleur par effet joule.

Ce dispositif de chauffage par effet joule comporte par exemple une résistance électrique chauffante 45 agencée entre l'entrée d'air 16 et le lit de matériau réactif 24, et conformée en échangeur thermique pour pouvoir être traversée par le flux d'air AF et pouvoir ainsi transférer de la chaleur à ce dernier.

Pour faciliter la régulation du système, la résistance électrique chauffante 45 peut avantageusement être de type « à coefficient positif », permettant ainsi de limiter la puissance de chauffe lorsque sa température augmente.

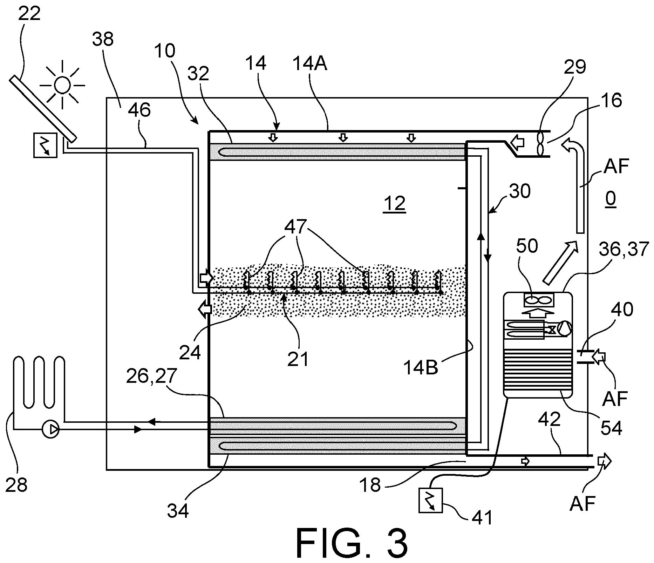

En variante, dans le système 10 illustré par la figure 3, le dispositif de chauffage par effet joule comporte une ou plusieurs résistances électriques chauffantes 47 agencées directement au sein du lit de matériau réactif 24.

Dans le cas où le lit de matériau réactif 24 comporte plusieurs étages, le dispositif de chauffage par effet joule comporte au moins une résistance électrique chauffante par étage, dans une partie supérieure de chaque étage.

De préférence, le dispositif de chauffage par effet joule comporte, le cas échéant pour chaque étage du lit de matériau réactif 24, une pluralité de résistances électriques chauffantes réparties dans un même plan de section du lit de matériau réactif 24, comme le montre la figure 3.

Les résistances électriques chauffantes ont une hauteur inférieure à une hauteur du lit de matériau réactif 24, ou le cas échéant, à une hauteur de chaque étage du lit de matériau réactif 24. De plus, les résistances électriques chauffantes sont placées en partie haute du lit de matériau réactif 24, ou le cas échéant, en partie haute de chaque étage du lit de matériau réactif 24.

La déshydratation se fait ainsi de haut en bas du lit de matériau réactif 24, du fait de la convection forcée permise par l'écoulement permanent du flux d'air AF induit par le fonctionnement du ventilateur 29, dans le mode de stockage d'énergie.

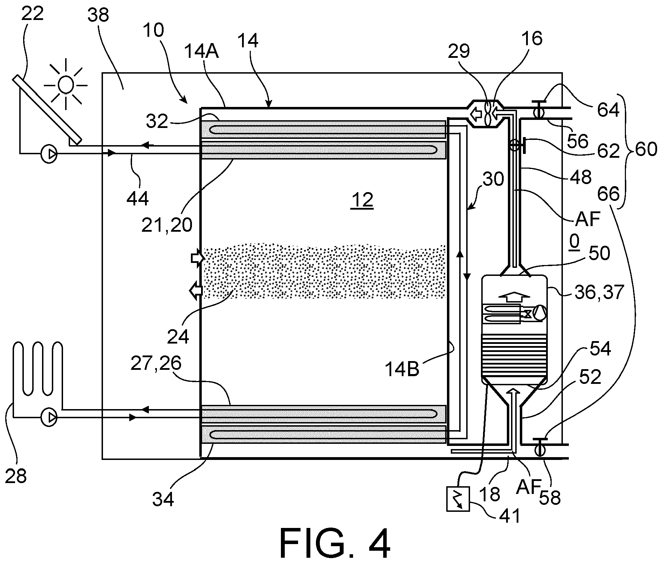

Dans un deuxième mode de réalisation préféré de l'invention illustré sur la figure 4, le système 10 comprend :
- une première canalisation 48 raccordant une sortie d'air 50 du déshumidificateur d'air 37 à l'entrée d'air 16 de l'enceinte 14 du réacteur thermochimique 12,
- une deuxième canalisation 52 raccordant la sortie d'air 18 de l'enceinte 14 à une entrée d'air 54 du déshumidificateur d'air 37,
- une troisième canalisation 56 qui raccorde l'entrée d'air 16 de l'enceinte 14 au milieu extérieur O,
- une quatrième canalisation 58 qui raccorde la sortie d'air 18 de l'enceinte 14 au milieu extérieur O, et
- un dispositif de commutation aéraulique 60 configuré pour autoriser une circulation d'air dans les première et deuxième canalisations 48, 52 et empêcher une circulation d'air dans les troisième et quatrième canalisations 56, 58 dans le mode de stockage d'énergie, et configuré pour autoriser une circulation d'air dans les troisième et quatrième canalisations 56, 58 et empêcher une circulation d'air dans les première et deuxième canalisations 48, 52 dans le mode de libération d'énergie.

Dans le mode de libération d'énergie, l'entrée d'air 16 de l'enceinte et la sortie d'air 18 de l'enceinte communiquent ainsi chacune avec le milieu extérieur O tandis que dans le mode de stockage d'énergie, le réacteur thermochimique 12 et le déshumidificateur d'air 37 sont raccordés l'un à l'autre en boucle fermée.

Le dispositif de commutation aéraulique 60 comporte par exemple :
- un premier registre aéraulique 62 agencé dans la première canalisation 48 ou dans la deuxième canalisation 52,
- un deuxième registre aéraulique 64 agencé dans la troisième canalisation 56, et
- un troisième registre aéraulique 66 agencé dans la quatrième canalisation 58.

Ainsi, dans le mode de stockage d'énergie, le premier registre aéraulique 62 est maintenu ouvert tandis que les deuxième et troisième registres aérauliques 64, 66 sont maintenus fermés, de sorte que le flux d'air AF circule en boucle dans un circuit fermé composé de la première canalisation 48, la deuxième canalisation 52, le déshumidificateur d'air 37 et l'enceinte 14 du réacteur thermochimique 12, comme illustré sur la figure 4.

De cette manière, le flux d'air AF passe par le déshumidificateur d'air 37 après chaque passage du flux d'air AF dans le réacteur thermochimique 12.

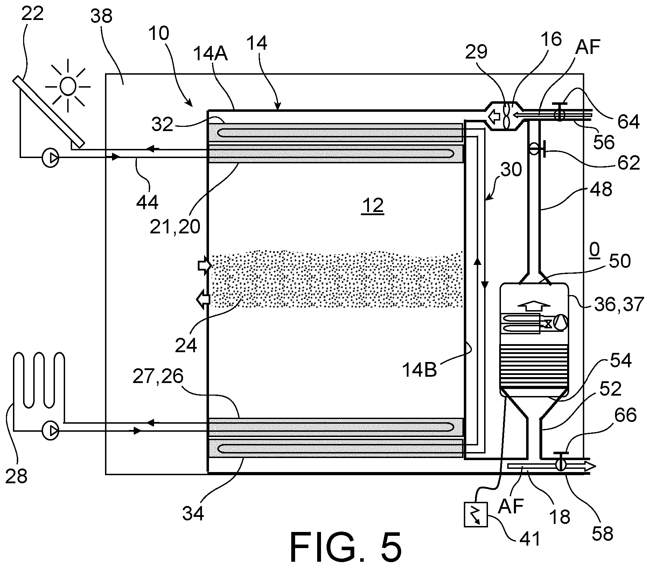

Dans le mode de libération d'énergie, le premier registre aéraulique 62 est maintenu fermé tandis que les deuxième et troisième registres aérauliques 64, 66 sont maintenus ouverts, de sorte que le flux d'air AF est admis depuis le milieu extérieur O par la troisième canalisation 56, circule ensuite dans l'enceinte 14, puis est évacué dans le milieu extérieur O par la quatrième canalisation 58, comme le montre la figure 5.

Le système 10 selon le deuxième mode de réalisation préféré de l'invention présente l'avantage d'éviter la circulation d'air à partir du, et vers, le milieu extérieur O dans le mode de stockage d'énergie. Une telle circulation d'air peut en effet être ressentie comme un désagrément pour les espaces extérieurs, qui sont surtout utilisés en période de stockage d'énergie, lorsque la ressource solaire est présente.

Dans l'exemple illustré sur les figures 4 et 5, le dispositif de captation d'énergie thermique 22, qui est raccordé au premier échangeur thermique 20, est un capteur solaire thermique ou un ensemble de tels capteurs, comme dans le système de la figure 1.

De plus, dans cet exemple, l'entrée d'air 16 est formée à l'extrémité supérieure de la paroi latérale 14B de l'enceinte.

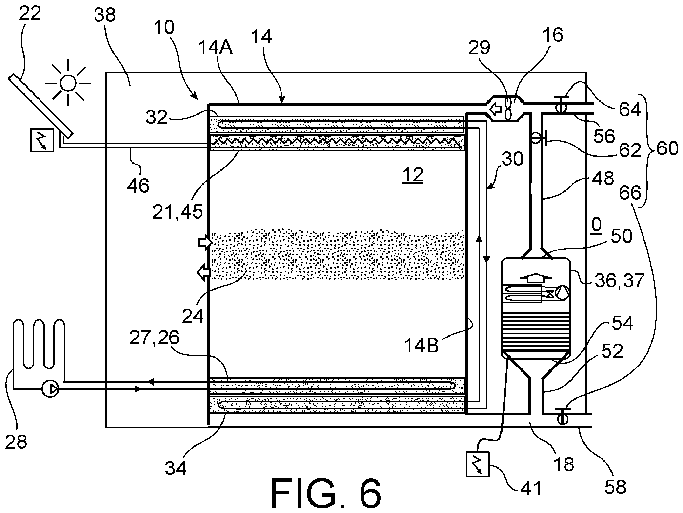

La figure 6 illustre une variante du système des figures 4 et 5, dans laquelle le dispositif de captation d'énergie thermique 22, qui est raccordé au premier dispositif de transfert d'énergie 21, est un capteur solaire photovoltaïque ou un ensemble de tels capteurs, comme dans le système de la figure 2.

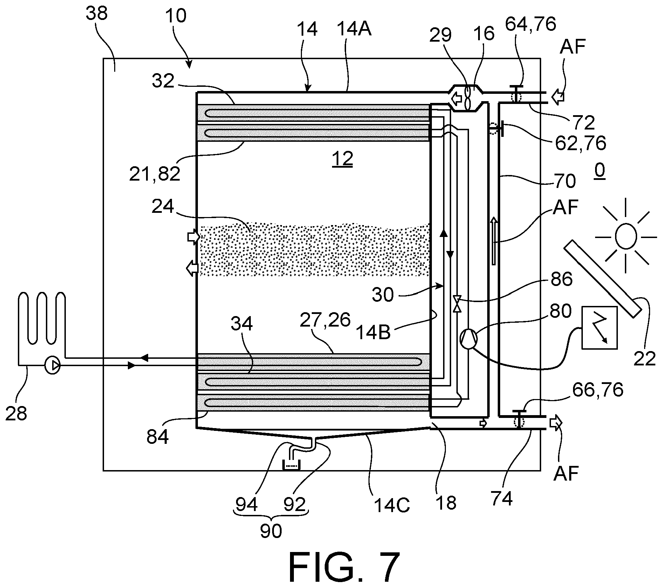

Dans un troisième mode de réalisation préféré de l'invention illustré sur la figure 7, le système 10 comprend une canalisation de retour 70 raccordant la sortie d'air 18 de l'enceinte 14 du réacteur thermochimique 12 à l'entrée d'air 16 de l'enceinte 14. Le système 10 comprend en outre une canalisation d'entrée 72 qui raccorde l'entrée d'air 16 de l'enceinte 14 au milieu extérieur O, et une canalisation de sortie 74 qui raccorde la sortie d'air 18 de l'enceinte 14 au milieu extérieur O. Le système 10 comprend en outre un dispositif de commutation aéraulique 76 configuré pour autoriser une circulation d'air en boucle dans l'enceinte 14 et la canalisation de retour 70 et empêcher une circulation d'air dans la canalisation d'entrée 72 et la canalisation de sortie 74 dans le mode de stockage d'énergie, et configuré pour autoriser une circulation d'air dans la canalisation d'entrée 72 et la canalisation de sortie 74 et empêcher une circulation d'air dans la canalisation de retour 70 dans le mode de libération d'énergie.

Le dispositif de commutation aéraulique 76 est par exemple semblable au dispositif de commutation aéraulique 60 décrit ci-dessus.

Le système 10 comprend en outre, raccordés en série de manière à mettre en œuvre un cycle frigorifique : un compresseur 80 alimenté en énergie électrique par le dispositif de captation d'énergie thermique 22 ; un échangeur-condenseur 82 agencé dans l'enceinte 14 du réacteur thermochimique 12 entre l'entrée d'air 16 de l'enceinte et le lit de matériau réactif 24, et constituant le premier dispositif de transfert d'énergie 21 précité; un échangeur-évaporateur 84 agencé dans l'enceinte 14 entre le deuxième dispositif de transfert d'énergie 27 et la sortie d'air 18 de l'enceinte, et constituant le dispositif de déshumidification 36 précité ; et un détendeur 86.

Autrement dit, le système 10 comporte un dispositif à cycle frigorifique comprenant les éléments 80 à 86 et un fluide frigorigène apte à circuler en boucle dans les éléments 80 à 86 pour la mise en œuvre d'un cycle frigorifique.

Dans un tel dispositif, le compresseur 80 comprime le fluide frigorigène en provoquant ainsi un échauffement du fluide frigorigène, l'échangeur-condenseur 82 permet que le fluide frigorigène se condense et cède de l'énergie thermique au milieu environnant, le détendeur 86 permet d'abaisser le point d'ébullition du fluide frigorigène, et l'échangeur-évaporateur 84 permet que le fluide frigorigène s'évapore en prenant de l'énergie thermique au milieu environnant. Après être passé dans l'échangeur-évaporateur 84, le fluide frigorigène revient au compresseur 80 et le cycle frigorifique recommence.

En l'espèce, le milieu environnant, avec lequel le dispositif à cycle frigorifique échange de l'énergie thermique, est le flux d'air AF.

En particulier, l'abaissement de température du flux d'air AF au contact de l'échangeur-évaporateur 84 provoque la condensation d'une partie au moins de la vapeur d'eau contenue dans le flux d'air AF, et permet ainsi l'abaissement de la teneur en vapeur d'eau du flux d'air AF avant que celui-ci ne retourne à l'entrée d'air 16 de l'enceinte 14 par la canalisation de retour 70.

De plus, l'échangeur-condenseur 82 permet de transférer de l'énergie thermique au flux d'air AF à partir d'énergie fournie par le compresseur 80, et donc indirectement à partir d'énergie fournie par le dispositif de captation d'énergie thermique 22. L'échangeur-condenseur 82 correspond ainsi effectivement à la définition donnée ci-dessus en ce qui concerne le premier dispositif de transfert d'énergie 21.

Le système 10 comprend en outre un dispositif d'évacuation d'eau 90 configuré pour permettre que de l'eau liquide, obtenue par condensation de vapeur d'eau du flux d'air AF au contact de l'échangeur-évaporateur 84, quitte l'enceinte 14, de manière étanche à l'égard du flux d'air AF.

Le dispositif d'évacuation d'eau 90 comprend par exemple un simple drain 92, raccordé à un siphon 94 pour éviter que de l'air ne pénètre dans l'enceinte 14 par le drain 92. Le drain 92 est avantageusement agencé à une extrémité inférieure de l'enceinte 14 lorsque le réacteur thermochimique 12 est dans une position de fonctionnement. À cet effet, le drain 92 est par exemple agencé au centre d'une paroi inférieure 14C de l'enceinte 14, laquelle paroi inférieure 14C est de préférence de forme concave, tronconique ou analogue.

Le compresseur 80 et le détendeur 86 sont avantageusement agencés à l'extérieur de l'enceinte 14, en étant par exemple fixés sur la paroi latérale 14B de l'enceinte 14.

Dans le cas où le système 10 comporte le dispositif de récupération de chaleur 30, l'échangeur-condenseur 82 est de préférence agencé entre le troisième échangeur thermique 32 et le lit de matériau réactif 24. De plus, l'échangeur-évaporateur 84 est agencé entre le quatrième échangeur thermique 34 et la sortie d'air 18 de l'enceinte 14.

Dans ce cas, le flux d'air AF sortant du lit de matériau réactif 24 est refroidi en deux étapes, d'abord à travers le quatrième échangeur thermique 34 du dispositif de récupération de chaleur 30, puis à travers l'échangeur-évaporateur 84 du dispositif à cycle frigorifique. Ceci permet de condenser l'eau contenue dans le flux d'air AF de manière particulièrement efficace, en produisant ainsi un air à faible humidité absolue. Ensuite, cet air sec est réchauffé en deux étapes également, d'abord à travers le troisième échangeur thermique 32 du dispositif de récupération de chaleur 30, puis à travers l'échangeur-condenseur 82 du dispositif à cycle frigorifique.

L'avantage de cette configuration réside notamment dans la compacité du système 10 permise par l'intégration de l'échangeur-condenseur 82 et de l'échangeur-évaporateur 84 dans l'enceinte 14 du réacteur thermochimique, alliée à une maximisation de la surface d'échange thermique de ces deux éléments, par comparaison avec un déshumidificateur d'air autonome.

La déshydratation du matériau réactif est rendue possible par le fait que l'échangeur-condenseur d'un dispositif à cycle frigorifique présente une puissance thermique supérieure à celle de l'échangeur-évaporateur du même dispositif, la différence étant de l'ordre de la puissance électrique fournie au compresseur. Cette différence permet de compenser l'enthalpie de réaction du matériau réactif, et donc de réaliser une déshydratation continue.

La puissance électrique absorbée par le compresseur 80 dans cette configuration est supérieure à celle consommée par le déshumidificateur d'air 37 des figures 1 à 6. En effet, l'échangeur-condenseur 82 fonctionne à plus haute température que dans un tel déshumidificateur d'air, alors que la température de l'échangeur-évaporateur 84 est sensiblement la même que dans un tel déshumidificateur d'air. Le coefficient de performance du cycle frigorifique est donc dégradé, ce qui entraîne une augmentation de la consommation électrique, à puissance frigorifique semblable. Toutefois, l'augmentation de cette puissance électrique se retrouve sous forme de surplus de chaleur au niveau de l'échangeur-condenseur 82, ce surplus de chaleur étant mis à profit pour compenser la chaleur de la réaction de déshydratation en circuit fermé. Il en résulte un système de déshydratation particulièrement efficace au regard de l'apport de puissance électrique.

Dans l'ensemble des exemples décrits ci-dessus, l'eau n'est pas stockée sous forme liquide en phase de stockage d'énergie. Toutefois, en variante, un système selon l'invention peut être configuré pour stocker l'eau sous forme liquide en phase de stockage d'énergie, et comprendre un dispositif d'humidification configuré pour injecter l'eau, préalablement stockée, sous forme de vapeur dans le flux d'air AF à pression atmosphérique, en phase de libération d'énergie.

Un autre aspect de la présente invention, qui va maintenant être décrit, se rapporte au domaine des réacteurs thermochimiques à air humide, et peut être avantageusement combiné aux enseignements ci-dessus.

Un réacteur thermochimique permet de faire réagir au moins deux réactifs, tour à tour pour les associer de manière exothermique, et pour les dissocier de manière endothermique.

Particulièrement, ce type de réacteur est utilisé pour stocker la chaleur de manière dense et sur de longues durées. Une application importante mais non limitative consiste à utiliser la chaleur solaire pour dissocier les réactifs puis à chauffer un bâtiment en les réassociant. Ces deux opérations peuvent être séparées par un intervalle de temps important. Il est en particulier possible d'utiliser cette technologie pour réaliser un stockage de chaleur intersaisonnier.

Le domaine de la présente invention se limite au domaine des réacteurs thermochimiques à air humide, c'est-à-dire dans lesquels un flux d'air est utilisé en tant que fluide caloporteur assurant les échanges thermiques entre l'un des réactifs, solide, et le milieu extérieur, et dans lesquels un autre des réactifs est de l'eau sous forme de vapeur contenue dans le flux d'air.

L'invention concerne en particulier, mais non exclusivement, les réacteurs dans lesquels le réactif solide est stocké tandis que l'eau, constituant l'autre réactif, n'est pas stockée et est prélevée dans l'air atmosphérique. De tels réacteurs thermochimiques fonctionnent ainsi en système ouvert au regard du réactif gazeux.

La réaction thermochimique opérée dans un tel système est une réaction de sorption de nature chimique et/ou physique.

De plus, le domaine de la présente invention se limite plus particulièrement au domaine des réacteurs intégrés à lit fixe. Un réacteur thermochimique est dit « intégré » quand une seule et même enceinte contient le lieu de la réaction et le stockage d'au moins un réactif. Ce dernier est, en l'espèce, le réactif solide. De plus, avec un lit fixe, le réactif solide reste toujours dans la zone où il est stocké.

De l'état de la technique, il est connu un système de stockage/libération thermochimique d'énergie à air humide, conçu pour fonctionner alternativement dans un mode de stockage d'énergie thermique et dans un mode de libération d'énergie thermique, et comprenant : un réacteur thermochimique comprenant une enceinte comportant une entrée d'air pour admettre un flux d'air dans l'enceinte et une sortie d'air pour rejeter le flux d'air hors de l'enceinte; un dispositif de captation d'énergie thermique extérieur à l'enceinte du réacteur thermochimique ; et un système de diffusion de chaleur extérieur à l'enceinte du réacteur thermochimique ; dans lequel le réacteur thermochimique comprend en outre, au sein de l'enceinte : une pluralité de chambres de réaction comportant chacune une entrée d'air respective et une sortie d'air respective qui sont configurées pour permettre la circulation d'une partie respective du flux d'air depuis l'entrée d'air respective jusqu'à la sortie d'air respective, et un lit de matériau réactif respectif configuré pour être traversé par la partie respective du flux d'air et configuré pour être déshydraté de manière endothermique pour stocker de l'énergie thermique, dans le mode de stockage d'énergie, et pour être hydraté de manière exothermique pour libérer l'énergie thermique préalablement stockée, dans le mode de libération d'énergie ; un passage d'air amont reliant l'entrée d'air de l'enceinte à l'entrée d'air respective de chacune des chambres de réaction ; un passage d'air aval séparé du passage d'air amont et reliant la sortie d'air respective de chacune des chambres de réaction à la sortie d'air de l'enceinte ; un premier dispositif de transfert d'énergie configuré pour fournir de l'énergie thermique à chacun des lits de matériau réactif respectifs des chambres de réaction, à partir d'énergie fournie par le dispositif de captation d'énergie thermique, dans le mode de stockage d'énergie ; un deuxième dispositif de transfert d'énergie agencé dans le passage d'air aval et configuré pour transférer de l'énergie thermique du flux d'air au système de diffusion de chaleur, dans le mode de libération d'énergie ; et un système de ventilation configuré pour faire circuler le flux d'air depuis l'entrée d'air de l'enceinte jusqu'à la sortie d'air de l'enceinte.

Le système de ventilation est en général constitué d'un ventilateur agencé dans le passage d'air amont, en amont des chambres de réaction, ou dans le passage d'air aval, en aval des chambres de réaction, eu égard au trajet du flux d'air.

La puissance thermique d'un tel système, en mode de libération d'énergie, est ainsi déterminée par la quantité de matériau réactif exposé au flux d'air dans chacune des chambres de réaction et par la cinétique de la réaction d'hydratation exothermique, qui est une donnée fixe, par l'état d'hydratation du matériau réactif solide, et par le débit du flux d'air.

Pour une puissance thermique plus faible, les systèmes actuels ne permettent toutefois pas de réduire les pertes thermiques associées au stock de matériau réactif.

Il existe donc un besoin pour un système de stockage/libération thermochimique d'énergie à air humide atmosphérique dont la puissance thermique soit modulable tout en maintenant un bon niveau d'efficacité énergétique, en mode de libération d'énergie thermique.

L'invention propose à cet effet un système de stockage/libération thermochimique d'énergie à air humide atmosphérique du type décrit ci-dessus, dans lequel le système de ventilation comprend une pluralité de dispositifs de ventilation agencés respectivement dans les chambres de réaction de manière à faire circuler chaque partie respective du flux d'air au travers du lit de matériau réactif respectif correspondant, et une unité de commande configurée pour commander les dispositifs de ventilation indépendamment les uns des autres.

D'une manière générale, la configuration du système de ventilation permet de faire varier la puissance thermique du système de stockage/libération thermochimique d'énergie en mode de libération d'énergie thermique d'une manière simple, économique, et efficace, en permettant de moduler le nombre de chambres de réaction contribuant, à un instant donné, à la production d'énergie thermique par le système.

En effet, le nombre de dispositifs de ventilation en fonctionnement à un instant donné détermine le nombre de chambres de réaction actives, c'est-à-dire dans lesquelles a lieu la réaction d'hydratation exothermique. Il suffit en effet d'alimenter électriquement le dispositif de ventilation d'une chambre de réaction pour qu'une partie respective du flux d'air circule dans le lit de matériau réactif correspondant et apporte ainsi au lit de matériau réactif respectif correspondant la vapeur d'eau nécessaire à la réaction d'hydratation exothermique. Inversement, il suffit de ne pas alimenter le dispositif de ventilation d'une chambre de réaction pour que, faute d'apport de vapeur d'eau, la réaction d'hydratation exothermique n'ait pas lieu dans ladite chambre de réaction.

De manière analogue, en mode de stockage d'énergie thermique, le système permet d'adapter le nombre de chambres de réaction actives, et donc la quantité de matériau réactif solide soumis à la réaction endothermique de déshydratation, à la puissance thermique disponible au niveau du dispositif de captation d'énergie thermique.

De préférence, les dispositifs de ventilation sont agencés dans les sorties d'air respectives des chambres de réaction.

De préférence, pour chacune des chambres de réaction :
- le lit de matériau réactif respectif présente une surface d'entrée pour la partie respective du flux d'air, agencée du côté de l'entrée d'air respective de la chambre de réaction, et une surface de sortie pour la partie respective du flux d'air, agencée du côté de la sortie d'air respective de la chambre de réaction, et
- la chambre de réaction est délimitée par une paroi d'extrémité respective agencée en regard de la surface de sortie du lit de matériau réactif respectif de sorte qu'un passage aéraulique de sortie respectif de la chambre de réaction délimité par la paroi d'extrémité respective et par la surface de sortie du lit de matériau réactif respectif débouche dans la sortie d'air respective de la chambre de réaction.

De préférence, pour chacune des chambres de réaction, la paroi d'extrémité respective est inclinée par rapport à la surface de sortie du lit de matériau réactif respectif de manière à se rapprocher de la surface de sortie du lit de matériau réactif respectif en s'éloignant de la sortie d'air respective de la chambre de réaction.

De préférence, les chambres de réaction sont en outre délimitées par une première paroi qui sépare les chambres de réaction du passage d'air amont, et par une deuxième paroi qui sépare les chambres de réaction du passage d'air aval et dans laquelle est agencée la sortie d'air respective de chacune des chambres de réaction, la paroi d'extrémité respective de chacune des chambres de réaction étant raccordée à la première paroi et à la deuxième paroi.

De préférence, l'entrée d'air respective d'au moins certaines des chambres de réaction est agencée dans la première paroi.

Dans des modes de réalisation de l'invention, l'entrée d'air respective de chacune des chambres de réaction est agencée dans la première paroi, sauf éventuellement en ce qui concerne celle parmi les chambres de réaction qui est située le plus près de l'entrée d'air de l'enceinte.

L'invention concerne également un procédé de mise en œuvre d'un système du type décrit ci-dessus, comportant au moins une étape de mise en marche de certains au moins des dispositifs de ventilation.

Le procédé comprend avantageusement au moins une phase de stockage d'énergie thermique, dans laquelle :
A) un flux d'air est admis dans l'enceinte par l'entrée d'air de celle-ci ; puis
B) le flux d'air circule dans le passage d'air amont ; puis
C) le flux d'air se divise en des parties qui pénètrent respectivement dans chacune des chambres de réaction dont le dispositif de ventilation respectif est en fonctionnement ; puis
D) de la chaleur est transférée au lit de matériau réactif respectif de chacune des chambres de réaction concernée par la circulation des parties du flux d'air, à partir d'énergie fournie par le dispositif de captation d'énergie thermique, de sorte que s'opère une réaction endothermique réversible de déshydratation du matériau réactif, aboutissant à un enrichissement en vapeur d'eau des parties du flux d'air ; puis
E) les parties du flux d'air pénètrent dans le passage d'air aval par les sorties d'air respectives des chambres de réaction, et le flux d'air ainsi formé circule dans le passage d'air aval jusqu'à la sortie d'air de l'enceinte ; puis
F) le flux d'air est rejeté hors de l'enceinte par la sortie d'air de l'enceinte.

Le procédé comprend avantageusement au moins une phase de libération d'énergie thermique, dans laquelle :
G) un flux d'air est admis dans l'enceinte du réacteur thermochimique par l'entrée d'air de l'enceinte ;
H) le flux d'air circule dans le passage d'air amont ;
I) le flux d'air se divise en des parties qui pénètrent respectivement les chambres de réaction dont le dispositif de ventilation respectif est en fonctionnement, par les entrée d'air respectives desdites chambres de réaction ;
J) les parties du flux d'air circulent respectivement au travers des lits de matériau réactif respectifs des chambres de réaction correspondantes, de sorte que s'opère une réaction exothermique réversible d'hydratation du matériau réactif à partir de vapeur d'eau contenue dans chacune des parties du flux d'air, entraînant un transfert de chaleur à chacune des parties du flux d'air à partir de chacun des lits de matériau réactif respectifs des chambres de réaction correspondantes ;
K) les parties respectives du flux d'air pénètrent dans le passage d'air aval à partir des sorties d'air respectives des chambres de réaction correspondantes, et le flux d'air ainsi formé circule dans le passage d'air aval ;
L) le flux d'air passe au travers du deuxième échangeur thermique et transfère de la chaleur au système de diffusion de chaleur ;
M) le flux d'air est rejeté hors de l'enceinte du réacteur thermochimique par la sortie d'air de l'enceinte.

De préférence, le procédé comprend en outre une étape de variation de la puissance du transfert de chaleur au système de diffusion de chaleur par la mise en marche d'au moins un des dispositifs de ventilation antérieurement à l'arrêt ou par l'arrêt d'au moins un des dispositifs de ventilation antérieurement en fonctionnement.

L'invention sera mieux comprise, et d'autres détails, avantages et caractéristiques de celle-ci apparaîtront à la lecture de la description suivante faite à titre d'exemple non limitatif et en référence aux dessins annexés dans lesquels :

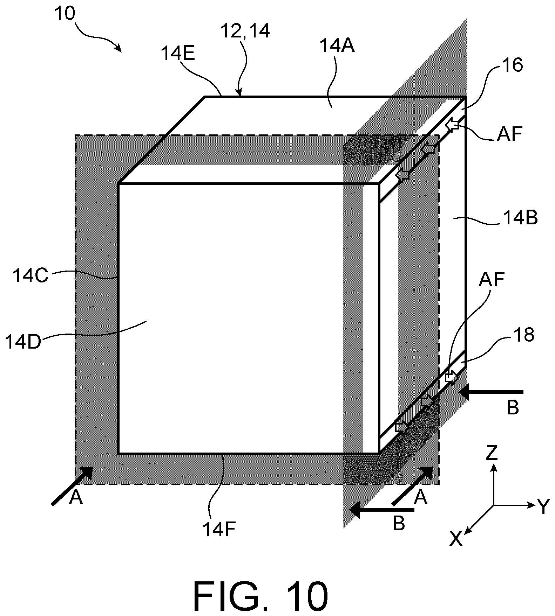

- la figure 10 est une vue schématique partielle en perspective d'un système de stockage/libération thermochimique d'énergie à air humide selon un mode de réalisation préféré de l'invention ;

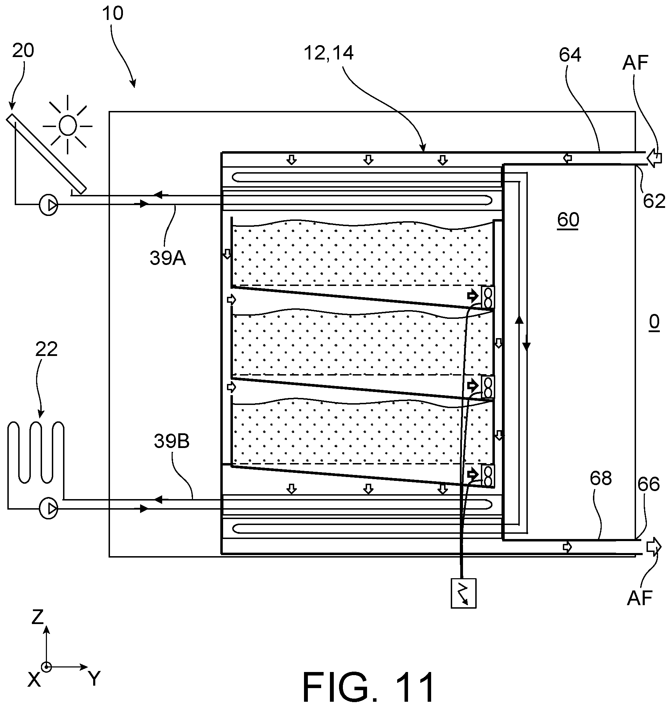

- la figure 11 est une vue schématique en section du système de la figure 10 selon le plan A-A de la figure 10 ;

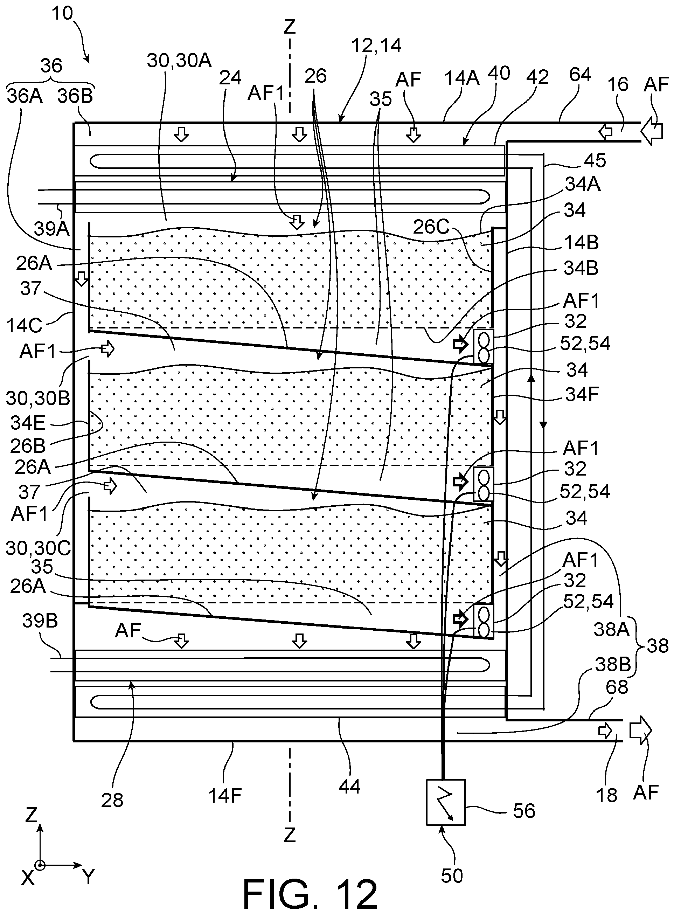

- la figure 12 est une vue à plus grande échelle d'une partie de la figure 11 ;

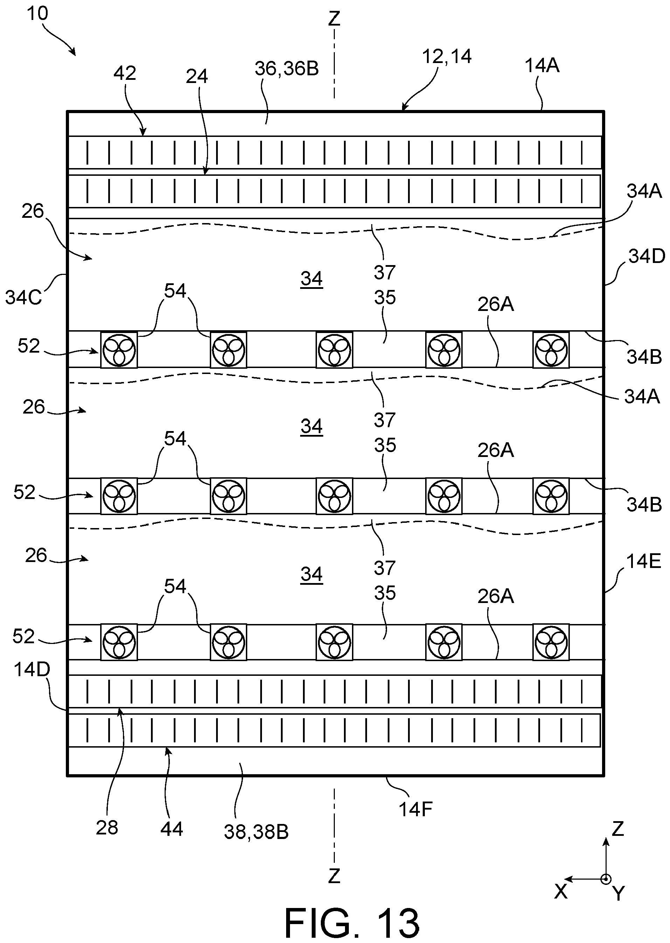

- la figure 13 est une vue schématique partielle en section du système de la figure 10 selon le plan B-B de la figure 10 ;

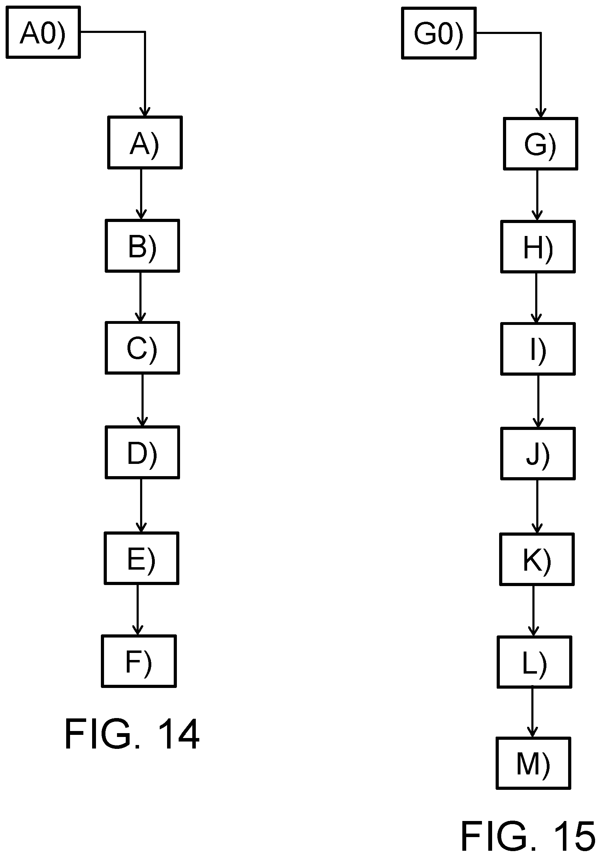

- la figure 14 est un diagramme schématique d'un procédé de stockage d'énergie au moyen d'un système de stockage/libération thermochimique d'énergie à air humide selon l'invention ;
- la figure 15 est un diagramme schématique d'un procédé de libération d'énergie au moyen d'un système de stockage/libération thermochimique d'énergie à air humide selon l'invention.

Dans l'ensemble de ces figures, des références identiques peuvent désigner des éléments identiques ou analogues. Il est à noter que les références numériques utilisées sur les figures 10 à 15 sont décorrélées des références numériques utilisées sur les figures 1 à 9.

La présente invention concerne de manière générale un système de stockage/libération thermochimique d'énergie à air humide, conçu pour fonctionner alternativement dans un mode de stockage d'énergie pour stocker de l'énergie thermique, et dans un mode de libération d'énergie pour restituer de l'énergie thermique préalablement stockée.

Une application majeure d'un tel système est le stockage de l'énergie solaire quand elle est abondante, dans le but de chauffer ultérieurement un bâtiment, quand l'énergie solaire n'est plus suffisamment disponible.

En référence à la figure 10, un tel système 10 comporte un réacteur thermochimique 12 qui comporte une enceinte 14.

L'enceinte 14 comporte une entrée d'air 16 pour admettre un flux d'air AF dans l'enceinte 14, et une sortie d'air 18 pour rejeter le flux d'air AF hors de l'enceinte 14.

L'enceinte 14 est par exemple en forme de parallélépipède rectangle. L'enceinte 14 comporte ainsi par exemple une paroi supérieure 14A, deux parois latérales opposées 14B et 14C, une paroi avant 14D et une paroi arrière 14E, et une paroi inférieure 14F, ces parois étant chacune de forme rectangulaire (éventuellement carrée). Ainsi, l'enceinte 14 étant posée sur un support horizontal comme sur les figures 10 à 12, les parois latérales 14B, 14C et les parois avant et arrière 14D, 14E s'étendent verticalement, tandis que les parois supérieure 14A et inférieure 14F s'étendent horizontalement. L'homme du métier comprendra néanmoins qu'un tel positionnement de l'enceinte 14 n'est pas indispensable au fonctionnement du réacteur thermochimique 12. À cet égard, un repère orthogonal de directions X, Y et Z est prévu sur les figures 10 à 12, la direction Z étant donc préférentiellement une direction verticale tandis que les directions X et Y sont préférentiellement des directions horizontales.

L'entrée d'air 16 est avantageusement formée à une extrémité supérieure de la paroi latérale 14B de l'enceinte, par exemple de sorte que l'entrée d'air 16 soit adjacente à la paroi supérieure 14A. La sortie d'air 18 est avantageusement formée à une extrémité inférieure de la paroi latérale 14B de l'enceinte, par exemple de sorte que la sortie d'air 18 soit adjacente à la paroi inférieure 14F. L'entrée d'air 16 et la sortie d'air 18 s'étendent par exemple chacune sur toute la largeur de la paroi latérale 14B, c'est-à-dire depuis la paroi avant 14D jusqu'à la paroi arrière 14E.

En référence à la figure 11, le système 10 comprend en outre un dispositif de captation d'énergie thermique 20 extérieur à l'enceinte 14, et un système de diffusion de chaleur 22 également extérieur à l'enceinte 14.

Dans le mode de réalisation illustré, l'entrée d'air 16 de l'enceinte et la sortie d'air 18 de l'enceinte communiquent chacune avec un milieu extérieur O, au moins dans le mode de libération d'énergie, comme cela apparaîtra plus clairement dans ce qui suit.

En référence à la figure 12, le réacteur thermochimique 12 comprend, au sein de l'enceinte 14, et dans cet ordre depuis l'entrée d'air 16 de l'enceinte vers la sortie d'air 18 de l'enceinte :
- un premier dispositif de transfert d'énergie 24 ;
- une pluralité de chambres de réaction 26 ; et
- un deuxième dispositif de transfert d'énergie 28.

Les chambres de réaction 26, par exemple au nombre de trois, présentent chacune une entrée d'air respective 30 et une sortie d'air respective 32 qui sont configurées pour permettre la circulation d'une partie respective AF1 du flux d'air AF depuis l'entrée d'air respective 30 jusqu'à la sortie d'air respective 32.

De plus, les chambres de réaction 26 comportent chacune un lit de matériau réactif respectif 34 configuré pour être traversé par la partie respective AF1 du flux d'air AF. À cet effet, le matériau réactif est par exemple un matériau poreux ou dispersé, éventuellement retenu par un tamis.

Le matériau réactif est apte à être déshydraté de manière endothermique pour stocker de l'énergie thermique, dans le mode de stockage d'énergie, et est apte à être hydraté de manière exothermique pour libérer l'énergie thermique préalablement stockée, dans le mode de libération d'énergie.

Chacun des lits de matériau réactif respectifs 34 est enfermé dans la chambre de réaction 26 correspondante et constitue donc un lit fixe.

Le lit de matériau réactif respectif 34 de chacune des chambres de réaction 26 présente une surface d'entrée 34A agencée du côté de l'entrée d'air respective 30 de la chambre de réaction, et par laquelle la partie correspondante AF1 du flux d'air AF pénètre dans le lit de matériau réactif respectif 34, en fonctionnement. Le lit de matériau réactif respectif 34 de chacune des chambres de réaction 26 présente une surface de sortie 34B agencée du côté de la sortie d'air respective 32 de la chambre de réaction, et par laquelle la partie correspondante AF1 du flux d'air AF quitte le lit de matériau réactif respectif 34. Le cas échant, la surface de sortie 34B est définie par le tamis précité.

Le réacteur thermochimique 12 comprend en outre, également au sein de l'enceinte 14, un passage d'air amont 36 reliant l'entrée d'air 16 de l'enceinte 14 à l'entrée d'air respective 30 de chacune des chambres de réaction 26, et un passage d'air aval 38 reliant la sortie d'air respective 32 de chacune des chambres de réaction 26 à la sortie d'air 18 de l'enceinte 14. Les passages d'air amont 36 et aval 38 sont ainsi séparés l'un de l'autre par la pluralité de chambres de réaction 26.

Dans le mode de réalisation préféré de l'invention illustré sur les figures 10 à 13, les chambres de réaction 26 sont agencées l'une à la suite de l'autre le long d'un axe Z-Z parallèle à une direction globale d'écoulement du flux d'air AF de l'entrée d'air 16 à la sortie d'air 18 de l'enceinte 14. L'axe Z-Z s'étend verticalement, dans la configuration illustrée par les figures 10 à 13. Les surfaces d'entrée et de sortie 34A et 34B des lits de matériau réactif respectifs 34 s'étendent par exemple de manière globalement transversale à l'axe Z-Z (ces surfaces n'étant pas nécessairement planes).

Chacune des chambres de réaction 26 est délimitée par une paroi d'extrémité respective 26A agencée en regard de la surface de sortie 34B du lit de matériau réactif respectif 34, de sorte qu'un passage aéraulique de sortie respectif 35 de la chambre de réaction, qui est délimité par la paroi d'extrémité respective 26A et par la surface de sortie 34B du lit de matériau réactif respectif 34, raccorde la surface de sortie 34B du lit de matériau réactif respectif 34 à la sortie d'air respective 32 de la chambre de réaction.

Les parois d'extrémité 26A respectives des chambres de réaction 26 s'étendent par exemple de manière parallèle les unes aux autres.

Pour chacune des chambres de réaction 26 autres que celle située le plus près de l'entrée d'air 16 de l'enceinte 14 (c'est-à-dire celle située le plus haut sur les figures 11 à 13), un passage aéraulique d'entrée respectif 37 de la chambre de réaction, délimité par la paroi d'extrémité respective 26A de la chambre de réaction 26 qui la précède, dans la direction allant de l'entrée d'air 16 vers la sortie d'air 18 de l'enceinte le long de l'axe Z-Z, raccorde la surface d'entrée 34A du lit de matériau réactif respectif 34 à l'entrée d'air respective 30 de la chambre de réaction.

De plus, les chambres de réaction 26 sont en outre délimitées par une première paroi 26B et par une deuxième paroi 26C.

Le passage d'air amont 36 comporte un canal distributeur 36A défini entre la paroi latérale 14C de l'enceinte 14 et la première paroi 26B, et un canal d'admission 36B reliant l'entrée d'air 16 de l'enceinte 14 au canal distributeur 36A et ayant sensiblement pour section de passage aéraulique la section interne de l'enceinte 14. Le canal d'admission 36B est ainsi défini entre la paroi supérieure 14A de l'enceinte et la pluralité de chambres de réaction 26.

Plus généralement, la première paroi 26B sépare ainsi chacune des chambres de réaction 26 du passage d'air amont 36.

Le passage d'air aval 38 comporte un canal collecteur 38A défini entre la paroi latérale 14B de l'enceinte 14 et la deuxième paroi 26C, et un canal d'échappement 38B reliant le canal collecteur 38A à la sortie d'air 18 de l'enceinte 14 et ayant sensiblement pour section de passage aéraulique la section interne de l'enceinte 14. Le canal d'échappement 38B est ainsi défini entre la paroi inférieure 14F de l'enceinte et la pluralité de chambres de réaction 26.

Plus généralement, la deuxième paroi 26C sépare ainsi chacune des chambres de réaction 26 du passage d'air aval 38.

Dans l'exemple illustré, les chambres de réaction 26 sont également délimitées par les parois avant 14D et arrière 14E de l'enceinte 14.

Dans cet exemple, les entrées d'air respectives 30 et les sorties d'air respectives 32 des chambres de réaction 26 s'étendent chacune depuis la paroi avant 14D jusqu'à la paroi arrière 14E de l'enceinte 14, si bien que la première paroi 26B et la deuxième paroi 26C sont chacune des parois segmentées, c'est-à-dire sont chacune formées de plusieurs segments de paroi délimitant respectivement les chambres de réaction 26.

De plus, la paroi d'extrémité respective 26A de chacune des chambres de réaction 26 est raccordée à la première paroi 26B et à la deuxième paroi 26C, sauf éventuellement en ce qui concerne la chambre de réaction située le plus près de la sortie d'air 18 de l'enceinte 14, pour laquelle la paroi d'extrémité respective 26A peut s'étendre en regard d'une extrémité de la deuxième paroi 26C (figure 12).

Les lits de matériau réactif respectifs 34 présentent de préférence chacun globalement la forme d'un parallélépipède rectangle, dont une face avant 34C, une face arrière 34D, et des faces latérales 34E et 34F, sont respectivement au contact des parois avant 14D et arrière 14E de l'enceinte 14 (figure 13) et des première et deuxième parois 26B et 26C (figure 12).

Dans l'exemple illustré, l'entrée d'air respective 30A de celle parmi les chambres de réaction qui est située le plus près de l'entrée d'air 16 de l'enceinte 14, c'est-à-dire la chambre de réaction située le plus haut sur les figures 12 et 13, est constituée par une section d'entrée de la chambre de réaction, transversale à l'axe Z-Z, et délimitée par les parois avant 14D et arrière 14E de l'enceinte 14 (figure 13) et par les première et deuxième parois 26B et 26C (figure 12). L'entrée d'air respective 30A de cette chambre de réaction débouche ainsi directement dans le canal d'admission 36B, et fait, le cas échéant, face au premier dispositif de transfert d'énergie24.

L'entrée d'air respective 30B, 30C de chacune des autres chambres de réaction 26 est agencée dans la première paroi 26B, et débouche ainsi directement dans le canal distributeur 36A.

En variante, la chambre de réaction qui est située le plus près de l'entrée d'air 16 de l'enceinte 14 peut être couverte par une paroi de couverture agencée en regard de la surface d'entrée 34A du lit de matériau réactif respectif 34 correspondant, de sorte que l'entrée d'air 30A de cette chambre de réaction soit définie dans la première paroi 26B et débouche directement dans le canal distributeur 36A.

De plus, dans l'exemple illustré, la sortie d'air respective 32 de chacune des chambres de réaction 26 est formée dans la deuxième paroi 26C, ou, le cas échéant en ce qui concerne la chambre de réaction située le plus près de la sortie d'air 18 de l'enceinte 14, la sortie d'air respective 32 peut être formée à une extrémité de la deuxième paroi 26C.

Le premier dispositif de transfert d'énergie24 est un premier échangeur thermique configuré pour transférer de l'énergie thermique au flux d'air AF à partir du dispositif de captation d'énergie thermique 20, dans le mode de stockage d'énergie.

Plus précisément, le premier dispositif de transfert d'énergie24 permet de chauffer le flux d'air AF dans le mode de stockage d'énergie, à partir d'énergie captée par le dispositif de captation d'énergie thermique 20, typiquement de l'énergie solaire, de sorte que le flux d'air AF chauffé transfère ensuite de la chaleur à tout ou partie des lits de matériau réactif respectifs 34 et permette ainsi la mise en œuvre de la réaction endothermique de déshydratation du matériau réactif, comme cela apparaîtra plus clairement dans ce qui suit.

Le premier dispositif de transfert d'énergie24 permet donc, de manière plus générale, de transférer de l'énergie thermique à chacun des lits de matériau réactif respectifs 34 des chambres de réaction 26, à partir d'énergie fournie par le dispositif de captation d'énergie thermique 20, dans le mode de stockage d'énergie.

Dans l'exemple illustré, le dispositif de captation d'énergie thermique 20 (figure 11) est un capteur solaire thermique ou un ensemble de tels capteurs. Il faut comprendre, par capteur solaire thermique, un capteur configuré pour exposer un liquide caloporteur, tel que de l'eau, au rayonnement solaire, afin de chauffer le liquide caloporteur.

Dans ce cas, le premier dispositif de transfert d'énergie24 est un échangeur air/liquide, par exemple air/eau, qui est donc raccordé par un circuit hydraulique 39A au dispositif de captation d'énergie thermique 20.

De plus, le premier dispositif de transfert d'énergie24 est agencé au sein du passage d'air amont 36 (figures 12 et 13), plus précisément au sein du canal d'admission 36B, et donc entre l'entrée d'air 16 de l'enceinte 14 et la pluralité de chambres de réaction 26.

Le deuxième dispositif de transfert d'énergie28 est un deuxième échangeur thermique configuré pour transférer de l'énergie thermique depuis le flux d'air AF (qui a été préalablement chauffé au contact d'au moins un lit de matériau réactif respectif 34 alors sujet à la réaction exothermique d'hydratation) au système de diffusion de chaleur 22, dans le mode de libération d'énergie.

Le système de diffusion de chaleur 22 (figure 11) est typiquement un réseau de chauffage central comprenant un ou plusieurs radiateur(s) ou plancher(s) chauffant(s).

Dans ce cas, le deuxième dispositif de transfert d'énergie28 est un échangeur air/liquide, par exemple un échangeur air/eau, qui est donc raccordé par un circuit hydraulique 39B au système de diffusion de chaleur 22.

De plus, le deuxième dispositif de transfert d'énergie28 est agencé au sein du passage d'air aval 38 (figures 12 et 13), plus précisément au sein du canal d'échappement 38B, et donc entre la pluralité de chambres de réaction 26 et la sortie d'air 18 de l'enceinte 14.

Le système comporte en outre de préférence un dispositif de récupération de chaleur 40. Le dispositif de récupération de chaleur 40 comprend un troisième échangeur thermique 42 agencé entre l'entrée d'air 16 de l'enceinte 14 et la pluralité de chambres de réaction 26, préférentiellement entre l'entrée d'air 16 et le premier dispositif de transfert d'énergie24. Le dispositif de récupération de chaleur 40 comprend en outre un quatrième échangeur thermique 44 agencé entre la pluralité de chambres de réaction 26 et la sortie d'air 18 de l'enceinte 14, plus précisément entre le dispositif de transfert d'énergie28 et la sortie d'air 18. Le troisième échangeur thermique 42 et le quatrième échangeur thermique 44 sont donc respectivement agencés dans le passage d'air amont 36 et le passage d'air aval 38, plus précisément au sein du canal d'admission 36B et du canal d'échappement 38B respectivement.

Le troisième échangeur thermique 42 et le quatrième échangeur thermique 44 sont des échangeurs air/liquide, par exemple des échangeurs air/eau, dont les circuits hydrauliques respectifs sont reliés entre eux par des canalisations 45, par exemple de manière à former un circuit fermé de thermosiphon. En variante, le troisième échangeur thermique 42 et le quatrième échangeur thermique 44 peuvent être remplacés par un échangeur air/air.

Le dispositif de récupération de chaleur 40 permet de récupérer de la chaleur que le flux d'air AF n'a pas préalablement transmise au deuxième dispositif de transfert d'énergie28 (dans le mode de libération d'énergie) ou n'a pas préalablement transmise aux lits de matériau réactif respectifs 34 des chambres de réaction 26 (dans le mode de stockage d'énergie), puis d'utiliser ladite chaleur pour préchauffer le flux d'air AF admis par l'entrée d'air 16 de l'enceinte 14 avant son passage dans tout ou partie des chambres de réaction 26. Un tel préchauffage permet d'améliorer l'efficacité des réactions d'hydratation et de déshydratation opérées au niveau des lits de matériau réactif respectifs 34 des chambres de réaction.

Les deuxième, troisième et quatrième échangeurs thermiques 28, 42, 44 étant tous de type air/liquide, ceux-ci présentent avantageusement des sections semblables, qui correspondent chacune à une section intérieure de l'enceinte 14.

Dans le cas où le premier échangeur thermique 24 est un échangeur air/liquide, par exemple air/eau, comme expliqué ci-dessus, le premier échangeur thermique 24 présente lui aussi avantageusement une section correspondant à la section intérieure de l'enceinte 14.

Les quatre échangeurs thermiques présentent ainsi des sections de passage aéraulique respectives semblables.

Par ailleurs, le système 10 comporte un système de ventilation 50 configuré pour induire une circulation forcée du flux d'air AF depuis l'entrée d'air 16 de l'enceinte 14 jusque la sortie d'air 18 de l'enceinte 14, dans les deux modes de fonctionnement du système.

Selon l'invention, le système de ventilation 50 comprend une pluralité de dispositifs de ventilation 52 agencés respectivement dans les chambres de réaction 26 de manière à faire circuler chaque partie respective AF1 du flux d'air AF au travers du lit de matériau réactif respectif 34 correspondant.

Chaque dispositif de ventilation 52 comporte un ventilateur, ou, de préférence, une rangée de plusieurs ventilateurs 54 (figure 13).

Le système de ventilation 50 comprend en outre une unité de commande 56 (figure 12) configurée pour commander les dispositifs de ventilation 52 indépendamment les uns des autres.

De préférence, les dispositifs de ventilation 52 sont agencés respectivement dans les sorties d'air respectives 32 des chambres de réaction 26 (figure 12). Ainsi, chaque dispositif de ventilation 52 agit efficacement sur l'ensemble de la partie AF1 du flux d'air AF circulant dans la chambre de réaction 26 correspondante.

La configuration du système de ventilation 50 offre notamment un moyen simple pour faire varier la puissance thermique du système 10, dans le mode de libération d'énergie thermique, et pour adapter la puissance de stockage du système à la puissance disponible au niveau du dispositif de captation d'énergie thermique 20 dans le mode de stockage d'énergie thermique, comme cela apparaîtra plus clairement dans ce qui suit.

Selon une autre caractéristique préférentielle, comme le montre la figure 12, la paroi d'extrémité respective 26A de chacune des chambres de réaction 26 est inclinée par rapport à la surface de sortie 34B du lit de matériau réactif respectif 34, de manière à se rapprocher de la surface de sortie 34B du lit de matériau réactif respectif en s'éloignant de la sortie d'air respective 32 de la chambre de réaction.

Ainsi, dans l'exemple illustré, la surface de sortie 34B du lit de matériau réactif respectif 34 de chacune des chambres de réaction 26 est une surface plane orthogonale à l'axe Z-Z, tandis que la paroi d'extrémité respective 26A de chacune des chambres de réaction 26 est inclinée par rapport à l'axe Z-Z, vers le bas dans une direction allant de la première paroi 26B vers la deuxième paroi 26C.

Un tel agencement de la paroi d'extrémité respective 26A permet de rapprocher les chambres de réaction 26 les unes des autres, et donc de réduire l'encombrement global de l'enceinte 14, tout en optimisant la circulation de l'air dans les chambres de réaction 26, comme cela apparaîtra plus clairement dans ce qui suit.

Par ailleurs, le réacteur thermochimique 12 est par exemple logé dans un local 60 (figure 11).

Le local 60 comprend une première ouverture 62 découchant dans le milieu extérieur O, et préférentiellement raccordée directement à l'entrée d'air 16 de l'enceinte 14 au moyen d'une canalisation d'admission 64. Ainsi, le flux d'air AF admis dans l'enceinte 14 provient directement du milieu extérieur O. En variante, le flux d'air AF peut toutefois être admis depuis l'intérieur du local 60 sans sortir du cadre de l'invention.

De manière analogue, le local 60 comprend une deuxième ouverture 66 découchant dans le milieu extérieur O, et préférentiellement raccordée directement à la sortie d'air 18 de l'enceinte 14 au moyen d'une canalisation d'échappement 68. Ainsi, le flux d'air AF est évacué par la canalisation d'échappement 68 directement dans le milieu extérieur O, ce qui permet de prévenir tout risque de contamination du local 60 par des composés qui seraient accidentellement présents dans le flux d'air AF.

Le fonctionnement du système 10 va maintenant être décrit.

En référence à la figure 14, un procédé de mise en œuvre du système 10 comprend au moins une phase de stockage d'énergie comportant une étape préalable A0 de mise en marche de certains au moins des dispositifs de ventilation 52, moyennant quoi :
A) un flux d'air AF est admis dans l'enceinte 14 par l'entrée d'air 16 de celle-ci, le cas échéant à partir de la canalisation d'admission 64 ; puis
B) le flux d'air AF circule dans le passage d'air amont 36 ; puis
C) le flux d'air AF se divise en des parties AF1 qui pénètrent respectivement dans chacune des chambres de réaction 26 dont le dispositif de ventilation respectif 52 est en fonctionnement ; puis
D) de la chaleur est transférée au lit de matériau réactif respectif 34 de chacune des chambres de réaction concernée par la circulation des parties AF1 du flux d'air AF, à partir d'énergie fournie par le dispositif de captation d'énergie thermique 20, de sorte que s'opère une réaction endothermique réversible de déshydratation du matériau réactif, aboutissant à un enrichissement en vapeur d'eau des parties AF1 du flux d'air AF ; puis
E) les parties AF1 du flux d'air AF pénètrent dans le passage d'air aval 38 par les sorties d'air 32 respectives des chambres de réaction 26, et le flux d'air AF ainsi formé circule dans le passage d'air aval jusqu'à la sortie d'air 18 de l'enceinte 14 ; puis
F) le flux d'air AF est rejeté hors de l'enceinte 14 par la sortie d'air 18 de l'enceinte, et est, le cas échéant, rejeté directement dans le milieu extérieur O au moyen de la canalisation d'échappement 68.

Dans le mode de réalisation illustré, l'étape B comprend le passage du flux d'air AF au travers du premier échangeur thermique 24 de sorte que de la chaleur reçue du dispositif de captation d'énergie thermique 20 est d'abord transférée au flux d'air AF, avant que les parties AF1 du flux d'air AF ne cèdent une partie au moins de cette chaleur au lit de matériau réactif respectif 34 de chacune des chambres de réaction concernées par la circulation des parties AF1 du flux d'air AF, au cours de l'étape D.

Dans le cas où le système 10 comporte le dispositif de récupération de chaleur 40, le flux d'air AF est en outre préchauffé lors de son passage au travers du troisième échangeur thermique 42 dans le passage d'air amont 36 à l'étape B. De plus, le flux d'air AF transfère de la chaleur au dispositif de récupération de chaleur 40 lors de son passage au travers du quatrième échangeur thermique 44 dans le passage d'air aval 38 à l'étape E.

Bien entendu, les étapes A-F sont mises en œuvre en continu tant que le système de ventilation 50 est actif.

En référence à la figure 15, un procédé de libération d'énergie au moyen du système 10 comprend une étape préalable G0 de mise en marche de certains au moins des dispositifs de ventilation 52 du système de ventilation 50, moyennant quoi :
G) un flux d'air AF est admis dans l'enceinte 14 par l'entrée d'air 16 de celle-ci, le cas échéant à partir de la canalisation d'admission 64 ; puis
H) le flux d'air AF circule dans le passage d'air amont 36 ; puis
I) le flux d'air AF se divise en des parties AF1 qui pénètrent respectivement dans chacune des chambres de réaction 26 dont le dispositif de ventilation respectif 52 est en fonctionnement, par les entrée d'air respectives 30 de ces chambres de réaction ; puis
J) les parties AF1 du flux d'air AF circulent respectivement au travers des lits de matériau réactif respectifs 34 des chambres de réaction 26 correspondantes, de sorte que s'opère une réaction exothermique réversible d'hydratation du matériau réactif à partir de vapeur d'eau contenue dans chacune des parties AF1 du flux d'air AF, entraînant un transfert de chaleur à chacune des parties AF1 du flux d'air AF à partir de chacun des lits de matériau réactif respectifs 34 des chambres de réaction 26 correspondantes ; puis
K) les parties AF1 du flux d'air AF pénètrent dans le passage d'air aval 38 à partir des sorties d'air respectives 32 des chambres de réaction 26 correspondantes, et le flux d'air AF ainsi formé circule dans le passage d'air aval 38 ;
L) le flux d'air AF passe au travers du deuxième dispositif de transfert d'énergie 28 et transfère ainsi de la chaleur au système de diffusion de chaleur 22 ;
M) le flux d'air AF est rejeté hors de l'enceinte 14 par la sortie d'air 18 de l'enceinte et est, le cas échéant, rejeté directement dans le milieu extérieur O au moyen de la canalisation d'échappement 68.

Dans le cas où le système 10 comporte le dispositif de récupération de chaleur 40, le flux d'air AF est en outre préchauffé lors de son passage au travers du troisième échangeur thermique 42 dans le passage d'air amont 36 à l'étape H. De plus, le flux d'air AF transfère de la chaleur au dispositif de récupération de chaleur 40 lors de son passage au travers du quatrième échangeur thermique 44 dans le passage d'air aval 38 à l'étape L.

Bien entendu, les étapes G-M sont mises en œuvre en continu tant que le système de ventilation 50 est actif.

D'une manière générale, la configuration du système de ventilation 50 prévue dans le cadre de la présente invention permet de faire varier la puissance thermique du système 10 en mode de libération d'énergie d'une manière simple, économique, et efficace, en permettant de moduler le nombre de chambres de réaction 26 contribuant, à un instant donné, à la production d'énergie thermique par le système 10. Le stock d'énergie thermochimique est ainsi divisé en fractions pouvant être sollicitées individuellement, correspondant aux chambres de réaction.

En effet, le nombre de dispositifs de ventilation 52 en fonctionnement à un instant donné détermine le nombre de chambres de réaction 26 actives, c'est-à-dire dans lesquelles a lieu la réaction d'hydratation exothermique. Il suffit en effet d'alimenter électriquement le dispositif de ventilation 52 d'une chambre de réaction 26 pour qu'une partie respective AF1 du flux d'air AF circule dans le lit de matériau réactif correspondant 34 et apporte ainsi à ce dernier la vapeur d'eau nécessaire à la réaction d'hydratation exothermique. Inversement, il suffit de ne pas alimenter le dispositif de ventilation 52 d'une chambre de réaction 26 pour que, faute d'apport de vapeur d'eau par le flux d'air, la réaction d'hydratation exothermique n'ait pas lieu dans ladite chambre de réaction.

La phase de libération d'énergie décrite ci-dessus peut ainsi comprendre au moins une étape de variation de la puissance du transfert de chaleur au système de diffusion de chaleur 22, par la mise en marche d'au moins un des dispositifs de ventilation 52 antérieurement à l'arrêt, auquel cas le système 10 connaît un accroissement de sa puissance thermique, ou par l'arrêt d'au moins un des dispositifs de ventilation 52 antérieurement en fonctionnement, auquel cas le système 10 connaît une réduction de sa puissance thermique.

Par ailleurs, la phase de stockage d'énergie décrite ci-dessus peut être mise en œuvre avec tous les dispositifs de ventilation 52 en fonctionnement, afin de maximiser le stockage d'énergie dès que de la ressource thermique est suffisamment disponible.

Toutefois, dans certaines circonstances, par exemple lorsque la puissance délivrée par le dispositif de captation d'énergie thermique 20 est trop faible pour permettre la mise en œuvre de la réaction de déshydratation endothermique sur la totalité du matériau réactif, il peut être préférable de concentrer l'énergie thermique disponible vers une partie seulement du matériau réactif, auquel cas seuls le ou les dispositifs de ventilation correspondants sont activés.

Le système 10 permet ainsi de stocker de l'énergie dans des circonstances dans lesquelles les systèmes de types connus sont inopérants.

Un autre avantage de l'invention est que la multiplicité des dispositifs de ventilation 52 et la décentralisation de ces derniers réduisent la criticité des pannes susceptibles d'affecter ces dispositifs.

Encore un autre avantage de l'invention est que l'agencement des dispositifs de ventilation 52 au sein des chambres de réaction 26, en mettant à profit à cet effet un volume qui est de toute manière nécessaire à l'écoulement de l'air dans chaque chambre de réaction 26, permet d'éviter le recours à un ventilateur de grande dimension dans l'un des passages d'air amont 36 et aval 38, et permet de ce fait de réduire l'encombrement global de l'enceinte 14.

De plus, comme chaque chambre de réaction 26 comporte au moins un ventilateur 54, le débit nécessaire par ventilateur 54 est divisé au moins par le nombre de chambres de réaction 26, par comparaison avec le débit qui serait nécessaire s'il n'y avait qu'un seul ventilateur pour tout le flux d'air AF. Les performances, et donc aussi les dimensions, requises pour chaque ventilateur 54, s'en trouvent ainsi limitées.

Les ventilateurs 54 peuvent ainsi avantageusement être des modèles à bas coût tels que ceux fabriqués en grande série et destinés au refroidissement de composants électroniques.

Un avantage lié au fait que les dispositifs de ventilation 52 sont agencés respectivement dans les sorties d'air respectives 32 des chambres de réaction 26 découle du fait que c'est en général en mode de stockage d'énergie que le flux d'air AF connaît ses températures les plus élevées. Or, dans ce mode de fonctionnement, les parties respectives AF1 du flux d'air AF sont à leur température maximale au niveau des entrées d'air respectives 30 des chambres de réaction, avant le transfert de chaleur aux lits de matériau réactif respectifs 34. La disposition préférentielle des dispositifs de ventilation 52 en aval des lits de matériau réactif respectifs 34 permet ainsi d'éviter que ces dispositifs ne soient exposés aux températures les plus élevées, ce qui permet de maximiser la durée de vie de ces dispositifs.

Par ailleurs, la caractéristique facultative relative à l'inclinaison de la paroi d'extrémité 26A de chaque chambre de réaction 26 permet de réduire l'encombrement de la pluralité de chambres de réaction 26, tout en optimisant la circulation des parties AF1 du flux d'air au sein de chacune des chambres de réaction.

L'air circule horizontalement dans les passages aérauliques d'entrée 37 et de sortie 35 respectifs des chambres de réaction 26. Cette circulation se fait à débit décroissant, en ce qui concerne les passages aérauliques d'entrée 37, et à débit croissant en ce qui concerne les passages aérauliques de sortie 35, car l'air est progressivement distribué vers les lits de matériau réactif respectifs 34 à partir des passages aérauliques d'entrée 37, tandis que l'air des passages aérauliques de sortie 35 est progressivement collecté à partir des lits de matériau réactif respectifs 34. L'inclinaison de la paroi d'extrémité 26A permet que la section de passage des passages aérauliques d'entrée 37 et que la section de passage des passages aérauliques de sortie 35 varient sensiblement comme le débit de l'air, c'est-à-dire de manière décroissante en s'éloignant des entrées d'air respectives 30 au sein des passages aérauliques d'entrée 37, et de manière croissante en se rapprochant des sorties d'air respectives 32 au sein des passages aérauliques de sortie 35.

La paroi d'extrémité 26A de chacune des chambres de réaction 26 peut en particulier être très proche de la surface de sortie 34B du lit de matériau réactif respectif 34 correspondant du côté du canal distributeur 36A. Du côté du canal collecteur 38A, cette même paroi peut être très proche de la surface d'entrée 34A du lit de matériau réactif respectif 34 de l'étage situé directement en-dessous. Cette configuration de paroi oblique permet de rapprocher les chambres de réaction 26 les unes des autres tout en maintenant une distribution aéraulique de qualité proche de celle obtenue avec des parois d'extrémité 26A horizontales.

Cette configuration offre en outre de la place pour un ou plusieurs ventilateurs 54 de plus grande dimension qu'une configuration avec des parois d'extrémité 26A horizontales. En effet, la section de passage, au sein de chacun des passages aérauliques de sortie 35, est maximale à proximité du canal collecteur 38A, emplacement auquel le ou les ventilateurs 54 sont préférentiellement placés.

Par ailleurs, l'exemple de système 10 décrit ci-dessus présente encore d'autres avantages selon lesquels :
- le chemin parcouru par le flux d'air AF est relativement court et présente peu de changements de direction ;
- les raccordements aérauliques extérieurs à l'enceinte 14 du réacteur thermochimique sont relativement simples ;
- tous les échanges de chaleur ont lieu dans l'enceinte 14.

Il en résulte que :
- la surface exposée aux pertes thermiques avec le milieu ambiant est limitée ;
- les pertes de charge du flux d'air sont limitées ;
- l'installation du système 10 est relativement simple ; et
- le système 10 peut être relativement compact.

Dans une variante de réalisation du système 10, le dispositif de captation d'énergie thermique 20, qui est raccordé au premier dispositif de transfert d'énergie 24, est un capteur solaire photovoltaïque ou un ensemble de tels capteurs.

Dans ce cas, le premier dispositif de transfert d'énergie 24 est un dispositif de chauffage par effet joule alimenté électriquement par un circuit électrique raccordé au dispositif de captation d'énergie thermique 20, pour produire de la chaleur par effet joule. Ce dispositif de chauffage par effet joule comporte par exemple une résistance électrique chauffante agencée entre l'entrée d'air 16 de l'enceinte 14 et la pluralité de chambres de réaction 26, et conformée pour pouvoir être traversée par le flux d'air AF et pouvoir ainsi transférer de la chaleur à ce dernier. Pour faciliter la régulation du système, la résistance électrique chauffante peut avantageusement être de type « à coefficient positif », permettant ainsi de limiter la puissance de chauffe lorsque sa température augmente.

En variante, le dispositif de chauffage par effet joule peut comporter au moins une résistance électrique chauffante respective agencée directement au sein de chacun des lits de matériau réactif respectifs 34 des chambres de réaction 26, de préférence dans une partie supérieure du lit. De préférence dans ce cas, le dispositif de chauffage par effet joule comporte une pluralité de résistances électriques chauffantes réparties dans un même plan de section pour chacun des lits de matériau réactif respectifs 34. Les résistances électriques chauffantes ont une hauteur inférieure à une hauteur de chacun des lits de matériau réactif respectifs 34. De plus, les résistances électriques chauffantes sont placées respectivement en partie haute de chacun des lits de matériau réactif respectifs 34. La déshydratation se fait ainsi de haut en bas pour chacun des lits de matériau réactif respectifs 34, du fait de la convection forcée permise par l'écoulement du flux d'air AF induit par le fonctionnement du système de ventilation 50, dans le mode de stockage d'énergie.

## Revendications

1. Système de stockage/libération thermochimique d'énergie à air humide (10), conçu pour fonctionner alternativement dans un mode de stockage d'énergie thermique et dans un mode de libération d'énergie thermique, et comprenant un réacteur thermochimique (12), un dispositif de captation d'énergie thermique (22) extérieur au réacteur thermochimique (12), et un système de diffusion de chaleur (28) extérieur au réacteur thermochimique (12),
dans lequel le réacteur thermochimique (12) comprend :
- une enceinte (14) comportant une entrée d'air (16) pour admettre un flux d'air (AF) dans l'enceinte et une sortie d'air (18) pour rejeter le flux d'air (AF) hors de l'enceinte ;
- un lit de matériau réactif (24) agencé dans l'enceinte (14) et configuré pour être déshydraté de manière endothermique pour stocker de l'énergie thermique, dans le mode de stockage d'énergie, et pour être hydraté de manière exothermique pour libérer l'énergie thermique préalablement stockée, dans le mode de libération d'énergie ;
- un premier dispositif de transfert d'énergie (21) agencé dans l'enceinte (14) et configuré pour fournir de l'énergie thermique au lit de matériau réactif (24) à partir d'énergie fournie par le dispositif de captation d'énergie thermique (22), dans le mode de stockage d'énergie ; et
- un deuxième dispositif de transfert d'énergie (27) agencé dans l'enceinte (14) et configuré pour transférer de l'énergie thermique du flux d'air (AF) au système de diffusion de chaleur (28), dans le mode de libération d'énergie, comprenant en outre un dispositif de déshumidification (36) configuré pour fonctionner dans le mode de stockage d'énergie en abaissant une teneur en vapeur d'eau du flux d'air (AF) avant passage de ce dernier au travers du lit de matériau réactif (24), et pour être hors service dans le mode de libération d'énergie.

2. Système selon la revendication 1, dans lequel le dispositif de déshumidification (36) est un déshumidificateur d'air (37) séparé de l'enceinte (14) du réacteur thermochimique (12) et est configuré pour fonctionner dans le mode de stockage d'énergie en déshumidifiant le flux d'air (AF) avant admission de ce dernier dans l'enceinte (14) par l'entrée d'air (16) de l'enceinte.

3. Système selon la revendication 2, comprenant en outre un local (38) dans lequel sont logés le réacteur thermochimique (12) et le déshumidificateur d'air (37) constituant le dispositif de déshumidification (36), et dans lequel débouche l'entrée d'air (16) de l'enceinte, le local (38) comprenant une admission d'air (40) débouchant dans un milieu extérieur (O), et le déshumidificateur d'air (37) étant configuré pour déshumidifier de l'air provenant de l'admission d'air (40) du local avant admission dudit air dans l'enceinte (14) du réacteur thermochimique par l'entrée d'air (16) de l'enceinte, dans le mode de stockage d'énergie.

4. Système selon la revendication 3, comprenant en outre une canalisation d'échappement (42) raccordant directement la sortie (18) de l'enceinte (14) du réacteur thermochimique au milieu extérieur (O).

5. Système selon la revendication 2, comprenant en outre une première canalisation (48) raccordant une sortie d'air (50) du déshumidificateur d'air (37) constituant le dispositif de déshumidification (36) à l'entrée d'air (16) de l'enceinte (14) du réacteur thermochimique (12), une deuxième canalisation (52) raccordant la sortie d'air (18) de l'enceinte (14) à une entrée d'air (54) du déshumidificateur d'air (37), une troisième canalisation (56) qui raccorde l'entrée d'air (16) de l'enceinte (14) à un milieu extérieur (O), une quatrième canalisation (58) qui raccorde la sortie d'air (18) de l'enceinte (14) au milieu extérieur (O), et un dispositif de commutation aéraulique (60) configuré pour autoriser une circulation d'air dans les première et deuxième canalisations (48, 52) et empêcher une circulation d'air dans les troisième et quatrième canalisations (56, 58) dans le mode de stockage d'énergie, et configuré pour autoriser une circulation d'air dans les troisième et quatrième canalisations (56, 58) et empêcher une circulation d'air dans les première et deuxième canalisations (48, 52) dans le mode de libération d'énergie.

6. Système selon l'une quelconque des revendications 2 à 5, comprenant en outre un capteur solaire photovoltaïque (41) alimentant électriquement le déshumidificateur d'air (37) constituant le dispositif de déshumidification (36), dans le mode de stockage d'énergie.

7. Système selon la revendication 1, comprenant en outre une canalisation de retour (70) raccordant la sortie d'air (18) de l'enceinte (14) à l'entrée d'air (16) de l'enceinte (14) du réacteur thermochimique (12), une canalisation d'entrée (72) qui raccorde l'entrée d'air (16) de l'enceinte (14) à un milieu extérieur (O), une canalisation de sortie (74) qui raccorde la sortie d'air (18) de l'enceinte (14) au milieu extérieur (O), et un dispositif de commutation aéraulique (76) configuré pour autoriser une circulation d'air en boucle dans l'enceinte (14) et la canalisation de retour (70) et empêcher une circulation d'air dans la canalisation d'entrée (72) et la canalisation de sortie (74) dans le mode de stockage d'énergie, et configuré pour autoriser une circulation d'air dans la canalisation d'entrée (72) et la canalisation de sortie (74) et empêcher une circulation d'air dans la canalisation de retour (70) dans le mode de libération d'énergie,
le système comprenant, raccordés en série de manière à mettre en œuvre un cycle frigorifique : un compresseur (80) alimenté en énergie électrique par le dispositif de captation d'énergie thermique (22) ; un échangeur-condenseur (82) agencé dans l'enceinte (14) du réacteur thermochimique entre l'entrée d'air (16) de l'enceinte et le lit de matériau réactif (24) et constituant le premier dispositif de transfert d'énergie (21) ; un échangeur-évaporateur (84) agencé dans l'enceinte (14) du réacteur thermochimique entre le deuxième dispositif de transfert d'énergie (27) et la sortie d'air (18) de l'enceinte et constituant le dispositif de déshumidification (36) ; et un détendeur (86), et
le système comprenant un dispositif d'évacuation d'eau (90) configuré pour permettre que de l'eau liquide, formée par condensation de vapeur d'eau du flux d'air (AF) au contact de l'échangeur-évaporateur (84), quitte l'enceinte (14).

8. Procédé de mise en œuvre d'un système (10) selon la revendication 1, le procédé comprenant au moins une phase de stockage d'énergie comprenant au moins des étapes de :
A) abaissement d'une teneur en vapeur d'eau d'un flux d'air (AF) au moyen du dispositif de déshumidification (36) ; puis
C) apport d'énergie thermique au lit de matériau réactif (24) à partir d'énergie fournie par le dispositif de captation d'énergie thermique (22) au moyen du premier dispositif de transfert d'énergie (21), et passage du flux d'air (AF) au travers du lit de matériau réactif (24), de sorte que s'opère une réaction endothermique réversible de déshydratation du matériau réactif, aboutissant à un enrichissement du flux d'air (AF) en vapeur d'eau.

9. Procédé selon la revendication 8, dans lequel le dispositif de déshumidification (36) est un déshumidificateur d'air (37) séparé de l'enceinte (14) du réacteur thermochimique (12), le procédé comprenant une étape B d'admission du flux d'air (AF) dans l'enceinte (14) du réacteur thermochimique (12) par l'entrée d'air (16) de l'enceinte après l'étape A et avant l'étape C, et le procédé comprenant, après l'étape C, une étape D de rejet du flux d'air (AF) hors de l'enceinte (14) du réacteur thermochimique par la sortie d'air (18) de l'enceinte.

10. Procédé selon la revendication 9, dans lequel l'enceinte (14) du réacteur thermochimique et le déshumidificateur d'air (37) sont logés dans un même local (38) dans lequel débouche l'entrée d'air (16) de l'enceinte, le local (38) comprenant une admission d'air (40) débouchant dans un milieu extérieur (O), le flux d'air (AF) étant admis par une entrée d'air (54) du déshumidificateur d'air (37) directement à partir du local (38), et le flux d'air (AF) étant rejeté par une sortie d'air (50) du déshumidificateur d'air (37) directement dans le local (38), au cours de l'étape A, et le flux d'air (AF) étant admis par l'entrée d'air (16) de l'enceinte (14) du réacteur thermochimique directement à partir du local (38), au cours de l'étape B.

11. Procédé selon la revendication 10, dans lequel le flux d'air (AF) est rejeté hors de l'enceinte (14) du réacteur thermochimique directement dans le milieu extérieur (O), au cours de l'étape D.

12. Procédé selon la revendication 9, dans lequel le flux d'air (AF) passé dans le déshumidificateur d'air (37) à l'étape A est rejeté dans une première canalisation (48) raccordée à l'entrée d'air (16) de l'enceinte (14) du réacteur thermochimique par laquelle le flux d'air (AF) est admis dans l'enceinte (14) du réacteur thermochimique, à l'étape B, et
dans lequel l'étape D comprend le rejet du flux d'air (AF) à partir de la sortie d'air (18) de l'enceinte (14) du réacteur thermochimique dans une deuxième canalisation (52) raccordée à une entrée d'air (54) du déshumidificateur d'air (37) par laquelle le flux d'air (AF) est admis dans le déshumidificateur d'air, à l'étape A.

13. Procédé selon l'une quelconque des revendications 8 à 12, dans lequel le dispositif de déshumidification (36) est alimenté en énergie électrique à partir d'un capteur solaire photovoltaïque (41).

14. Procédé selon la revendication 8, dans lequel le système (10) comprend une canalisation de retour (70) raccordant la sortie d'air (18) de l'enceinte (14) à l'entrée d'air (16) de l'enceinte (14), une canalisation d'entrée (72) qui raccorde l'entrée d'air (16) de l'enceinte (14) à un milieu extérieur (O), une canalisation de sortie (74) qui raccorde la sortie d'air (18) de l'enceinte (14) au milieu extérieur (O), et un dispositif de commutation aéraulique (76) configuré pour autoriser une circulation d'air en boucle dans l'enceinte (14) et la canalisation de retour (70) et empêcher une circulation d'air dans la canalisation d'entrée (72) et la canalisation de sortie (74) dans le mode de stockage d'énergie, et configuré pour autoriser une circulation d'air dans la canalisation d'entrée (72) et la canalisation de sortie (74) dans le mode de stockage d'énergie et empêcher une circulation d'air dans la canalisation de retour (70) dans le mode de libération d'énergie, dans lequel le système comprend, raccordés en série de manière à mettre en œuvre un cycle frigorifique : un compresseur (80) alimenté en énergie électrique par le dispositif de captation d'énergie thermique (22) ; un échangeur-condenseur (82) agencé dans l'enceinte (14) du réacteur thermochimique entre l'entrée d'air (16) de l'enceinte et le lit de matériau réactif (24), et constituant le premier dispositif de transfert d'énergie (21) ; un échangeur-évaporateur (84) agencé dans l'enceinte (14) du réacteur thermochimique entre le deuxième dispositif de transfert d'énergie (27) et la sortie d'air (18) de l'enceinte, et constituant ledit dispositif de déshumidification (36) ; et un détendeur (86),
et dans lequel l'étape A est mise en œuvre par condensation de vapeur d'eau du flux d'air (AF) sur l'échangeur-évaporateur (84), et l'étape C comporte un transfert de chaleur au flux d'air (AF) à partir de l'échangeur-condenseur (82) puis un transfert de chaleur du flux d'air (AF) au lit de matériau réactif (24).

## Patentansprüche

1. System für die Freigabe/Speicherung thermochemischer Feuchtluftenergie (10), welches dazu ausgebildet ist, abwechselnd in einem thermischen Energiespeichermodus und einem thermischen Energiefreisetzungsmodus zu arbeiten, und welches einen thermochemischen Reaktor (12), eine Vorrichtung zum Erfassen thermischer Energie (22) außerhalb des thermochemischen Reaktors (12) und ein Wärmediffusionssystem (28) außerhalb des thermochemischen Reaktors (12) umfasst,
wobei der thermochemische Reaktor (12) umfasst:
- eine Kammer (14), umfassend einen Lufteinlass (16) zum Einlassen eines Luftstroms (AF) in die Kammer und einen Luftauslass (18) zum Abführen des Luftstroms (AF) aus der Kammer;
- ein Bett aus reaktivem Material (24), das in der Kammer (14) angeordnet und dazu ausgebildet ist, im Energiespeichermodus endotherm dehydriert zu werden, um thermische Energie zu speichern, und im Energiefreisetzungsmodus exotherm hydratisiert zu werden, um die zuvor gespeicherte thermische Energie freizusetzen,
- eine erste Energieübertragungsvorrichtung (21), die in der Kammer (14) angeordnet und dazu ausgebildet ist, im Energiespeichermodus dem Bett aus reaktivem Material (24) thermische Energie auf der Basis der von der Vorrichtung zum Erfassen thermischer Energie (22) im Energiespeichermodus gelieferten Energie zuzuführen; und
- eine zweite Energieübertragungsvorrichtung (27), die in der Kammer (14) angeordnet ist und dazu ausgebildet ist, im Energiefreisetzungsmodus thermische Energie von dem Luftstrom (AF) zu dem Wärmediffusionssystem (28) zu übertragen,
ferner umfassend eine Entfeuchtungsvorrichtung (36), die dazu ausgebildet ist, im Energiespeicherungsmodus durch Senken eines Wasserdampfgehalts des Luftstroms (AF) vor dessen Durchfluss durch das Bett aus reaktivem Material (24) zu operieren und in dem Energiefreisetzungsmodus deaktiviert zu sein.

2. System nach Anspruch 1, wobei die Entfeuchtungsvorrichtung (36) ein Luftentfeuchter (37) ist, der von der Kammer (14) des thermochemischen Reaktors (12) getrennt ist und dazu ausgebildet ist, im Energiespeichermodus zu arbeiten, indem er den Luftstrom (AF) vor dem Einlassen des Luftstroms (AF) in die Kammer (14) durch den Lufteinlass (16) der Kammer entfeuchtet.

3. System nach Anspruch 2, welches ferner einen Raum (38) umfasst, in dem der thermochemische Reaktor (12) und der Luftentfeuchter (37) aufgenommen sind, die die Entfeuchtungsvorrichtung (36) bilden, und in den der Lufteinlass (16) der Kammer mündet, wobei der Raum (38) einen Lufteinlass (40) umfasst, der in ein äußeres Milieu (O) mündet, und der Luftentfeuchter (37) dazu ausgebildet ist, Luft aus dem Lufteinlass (40) des Raums zu entfeuchten, bevor die Luft im Energiespeichermodus durch den Lufteinlass (16) der Kammer in die Kammer (14) des thermochemischen Reaktors eingelassen wird.

4. System nach Anspruch 3, welches ferner eine Abgasleitung (42) umfasst, die den Luftauslass (18) der Kammer (14) des thermochemischen Reaktors (14) direkt mit dem äußeren Milieu (O) verbindet.

5. System nach Anspruch 2, welches ferner eine erste Leitung (48) umfasst, die einen Luftauslass (50) des Luftentfeuchters (37), der die Entfeuchtungsvorrichtung (36) bildet, mit dem Lufteinlass (16) der Kammer (14) des thermochemischen Reaktors (12) verbindet, eine zweite Leitung (52), die den Luftauslass (18) der Kammer (14) mit einem Lufteinlass (54) des Luftentfeuchters (37) verbindet, eine dritte Leitung (56), die den Lufteinlass (16) der Kammer (14) mit einem äußeren Milieu (O) verbindet, eine vierte Leitung (58), die den Luftauslass (18) der Kammer (14) mit dem äußeren Milieu (O) verbindet, und eine Luftschaltvorrichtung (60), die dazu ausgebildet ist, im Energiespeichermodus einen Luftstrom in der ersten und zweiten Leitung (48, 52) zuzulassen und einen Luftstrom in der dritten und vierten Leitung (56, 58) zu verhindern, und dazu ausgebildet ist, im Energiefreisetzungsmodus einen Luftstrom in der dritten und vierten Leitung (56, 58) zulassen und einen Luftstrom in der ersten und zweiten Leitung (48, 52) zu verhindern.

6. System nach einem der Ansprüche 2 bis 5, welches ferner einen photovoltaischen Solarkollektor (41) umfasst, der im Energiespeichermodus den Luftentfeuchter (37), welcher die Entfeuchtungsvorrichtung (36) bildet, elektrisch versorgt.

7. System nach Anspruch 1, welches ferner eine Rücklaufleitung (70) umfasst, die den Luftauslass (18) der Kammer (14) mit dem Lufteinlass (16) der Kammer (14) des thermochemischen Reaktors (12) verbindet, eine Einlassleitung (72), die den Lufteinlass (16) der Kammer (14) mit einem äußeren Milieu (O) verbindet, eine Auslassleitung (74), die den Luftauslass (18) der Kammer (14) mit dem äußeren Milieu (O) verbindet, und eine Luftschaltvorrichtung (76), die dazu ausgebildet ist, im Energiespeichermodus einen schleifenförmigen Luftstrom in der Kammer (14) und der Rücklaufleitung (70) zuzulassen und einen Luftstrom in der Einlassleitung (72) und der Auslassleitung (74) zu verhindern, und dazu ausgebildet ist, im Energiefreisetzungsmodus einen Luftstrom in der Einlassleitung (72) und der Auslassleitung (74) zuzulassen und einen Luftstrom in der Rücklaufleitung (70) zu verhindern,
wobei das System, in Reihe geschaltet, um einen Kältekreislauf zu realisieren, umfasst: einen Kompressor (80), der von der Vorrichtung zum Erfassen thermischer Energie (22) mit elektrischer Energie versorgt wird; einen Kondensator-Austauscher (82), der in der Kammer (14) des thermochemischen Reaktors zwischen dem Lufteinlass (16) der Kammer und dem Bett aus reaktivem Material (24) angeordnet ist und die erste Energieübertragungsvorrichtung (21) bildet; einen Verdampfer-Austauscher (84), der in der Kammer (14) des thermochemischen Reaktors zwischen der zweiten Energieübertragungsvorrichtung (27) und dem Luftauslass (18) der Kammer angeordnet ist und die Entfeuchtungsvorrichtung (36) bildet, und eine Expansionsvorrichtung (86), und
wobei das System eine Wasserauslassvorrichtung (90) umfasst, die dazu ausgebildet ist, flüssiges Wasser, das durch Kondensation von Wasserdampf aus dem Luftstrom (AF) in Kontakt mit dem Verdampfer-Austauscher (84) gebildet wird, aus der Kammer (14) austreten zu lassen.

8. Verfahren zur Realisierung eines Systems (10) nach Anspruch 1, wobei das Verfahren wenigstens eine Energiespeicherphase umfasst, die wenigstens die folgenden Schritte umfasst:
A) Senken eines Wasserdampfgehalts eines Luftstroms (AF) mittels der Entfeuchtungsvorrichtung (36); dann
C) Zuführen von Wärmeenergie zu dem Bett aus reaktivem Material (24) auf der Basis der von der Vorrichtung zum Erfassen thermischer Energie (22) gelieferten Energie mittels der ersten Energieübertragungsvorrichtung (21), und Durchfluss des Luftstroms (AF) durch das Bett aus reaktivem Material (24), sodass eine reversible endotherme Reaktion der Dehydratisierung des reaktiven Materials stattfindet, was zu einer Anreicherung des Luftstroms (AF) mit Wasserdampf führt.

9. Verfahren nach Anspruch 8, wobei die Entfeuchtungsvorrichtung (36) ein von der Kammer (14) des thermochemischen Reaktors (12) getrennter Luftentfeuchter (37) ist, wobei das Verfahren einen Schritt B des Einlassens des Luftstroms (AF) in die Kammer (14) des thermochemischen Reaktors (12) durch den Lufteinlass (16) der Kammer nach Schritt A und vor Schritt C umfasst, und das Verfahren nach Schritt C einen Schritt D des Ablassens des Luftstroms (AF) aus der Kammer (14) des thermochemischen Reaktors durch den Luftauslass (18) der Kammer umfasst.

10. Verfahren nach Anspruch 9, wobei die Kammer (14) des thermochemischen Reaktors und der Luftentfeuchter (37) in einem gleichen Raum (38) aufgenommen sind, in den der Lufteinlass (16) der Kammer mündet, wobei der Raum (38) einen Lufteinlass (40) aufweist, der in ein äußeres Milieu (O) mündet, wobei der Luftstrom (AF) durch einen Lufteinlass (54) des Luftentfeuchters (37) direkt vom Raum (38) eingelassen wird und wobei in Schritt A der Luftstrom (AF) durch einen Luftauslass (50) des Luftentfeuchters (37) direkt in den Raum (38) abgelassen wird und in Schritt B der Luftstrom (AF) durch den Lufteinlass (16) der Kammer (14) des thermochemischen Reaktors direkt aus dem Raum (38) eingelassen wird.

11. Verfahren nach Anspruch 10, wobei der Luftstrom (AF) in Schritt D aus der Kammer (14) des thermochemischen Reaktors direkt in das äußere Milieu (O) abgelassen wird.

12. Verfahren nach Anspruch 9, wobei der in Schritt A in den Luftentfeuchter (37) geleitete Luftstrom (AF) in Schritt B in einen ersten Kanal (48) abgelassen wird, der mit dem Lufteinlass (16) der Kammer (14) des thermochemischen Reaktors verbunden ist, durch den der Luftstrom (AF) in die Kammer (14) des thermochemischen Reaktors eingelassen wird,
und
wobei Schritt D das Ablassen des Luftstroms (AF) aus dem Luftauslass (18) der Kammer (14) des thermochemischen Reaktors in eine zweite Leitung (52) umfasst, die mit einem Lufteinlass (54) des Luftentfeuchters (37) verbunden ist, durch den der Luftstrom (AF) in den Luftentfeuchter in Schritt A eingelassen wird.

13. Verfahren nach einem der Ansprüche 8 bis 12, wobei die Entfeuchtungsvorrichtung (36) mit elektrischer Energie aus einem photovoltaischen Solarkollektor (41) versorgt wird.

14. Verfahren nach Anspruch 8, wobei das System (10) eine Rücklaufleitung (70) umfasst, die den Luftauslass (18) der Kammer (14) mit dem Lufteinlass (16) der Kammer (14) verbindet, eine Einlassleitung (72), die den Lufteinlass (16) der Kammer (14) mit einem äußeren Milieu (O) verbindet, eine Auslassleitung (74), die den Luftauslass (18) der Kammer (14) mit dem äußeren Milieu (O) verbindet und eine Luftschaltvorrichtung (76), die dazu ausgebildet ist, im Energiespeichermodus einen schleifenförmigen Luftstrom durch die Kammer (14) und die Rücklaufleitung (70) zuzulassen und einen Luftstrom durch die Einlassleitung (72) und die Auslassleitung (74) zu verhindern, und dazu ausgebildet ist, im Energiefreisetzungsmodus einen Luftstrom in der Einlassleitung (72) und der Auslassleitung (74) zuzulassen und im Energiefreisetzungsmodus einen Luftstrom in der Rücklaufleitung (70) zu verhindern, wobei das System in Reihe geschaltet zur Realisierung eines Kühlzyklus umfasst: einen Kompressor (80), der von der Vorrichtung zum Erfassen thermischer Energie (22) mit elektrischer Energie versorgt wird; einen Kondensator-Austauscher (82), der in der Kammer (14) des thermochemischen Reaktors (14) zwischen dem Lufteinlass (16) der Kammer und dem Bett aus reaktivem Material (24) angeordnet ist und die erste Energieübertragungsvorrichtung (21) bildet; einen Verdampfer-Austauscher (84), der in der Kammer (14) des thermochemischen Reaktors zwischen der zweiten Energieübertragungsvorrichtung (27) und dem Luftauslass (18) der Kammer angeordnet ist und die Entfeuchtungsvorrichtung (36) bildet; und eine Expansionsvorrichtung (86),
und wobei Schritt A durch Kondensieren von Wasserdampf des Luftstroms (AF) an dem Verdampfer-Austauscher (84) durchgeführt wird und Schritt C eine Wärmeübertragung auf den Luftstrom (AF) vom Kondensator-Austauscher (82) und dann eine Wärmeübertragung vom Luftstrom (AF) auf das Bett aus reaktivem Material (24) umfasst.

## Claims

1. Moist-air system (10) for thermochemical storage/release of energy designed to operate alternatively in a thermal energy storage mode and in a thermal energy release mode, and comprising a thermochemical reactor (12), a thermal energy capture device (22) external to the thermochemical reactor (12), and a heat diffusion system (28) external to the thermochemical reactor (12),
wherein the thermochemical reactor (12) comprises:
- a chamber (14) including an air inlet (16) for admitting an air flow (AF) into the chamber and an air outlet (18) for discharging the air flow (AF) out of the chamber;
- a bed of reactive material (24) arranged in the chamber (14) and configured to be dehydrated endothermically to store thermal energy, in the energy storage mode, and to be hydrated exothermically to release the thermal energy previously stored, in the energy release mode;
- a first energy transfer device (21) arranged in the chamber (14) and configured to supply thermal energy to the bed of reactive material (24) from energy supplied by the thermal energy capture device (22), in the energy storage mode; and
- a second energy transfer device (27) arranged in the chamber (14) and configured to transfer thermal energy from the air flow (AF) to the heat diffusion system (28), in the energy release mode,
further comprising a dehumidification device (36) configured to operate in the energy storage mode by reducing a water vapour content of the air flow (AF) before the latter passes through said bed of reactive material (24), and to be out of service in the energy release mode.

2. System according to claim 1, wherein the dehumidification device (36) is an air dehumidifier (37) separated from the chamber (14) of the thermochemical reactor (12) and is configured to operate in the energy storage mode by dehumidifying the air flow (AF) before the latter is admitted into the chamber (14) through the air inlet (16) of the chamber.

3. System according to claim 2, further comprising a room (38) in which the thermochemical reactor (12) and the air dehumidifier (37) constituting the dehumidification device (36) are housed and in which the air inlet (16) of the chamber emerges, the room (38) comprising an air inlet (40) emerging in an external environment (O), and the air dehumidifier (37) being configured to dehumidify air coming from the air inlet (40) of the room before said air is admitted into the chamber (14) of the thermochemical reactor through the air inlet (16) of the chamber, in the energy storage mode.

4. System according to claim 3, further comprising an exhaust pipe (42) directly connecting the outlet (18) of the chamber (14) of the thermochemical reactor to the external environment (O).

5. System according to claim 2, further comprising a first pipe (48) connecting an air outlet (50) of the air dehumidifier (37) constituting the dehumidification device (36) to the air inlet (16) of the chamber (14) of the thermochemical reactor (12), a second pipe (52) connecting the air outlet (18) of the chamber (14) to an air inlet (54) of the air dehumidifier (37), a third pipe (56) that connects the air inlet (16) of the chamber (14) to an external environment (O), a fourth pipe (58) that connects the air outlet (18) of the chamber (14) to the external environment (O), and an aeraulic switching device (60) configured to allow a flow of air in the first and second pipes (48, 52) and to prevent a flow of air in the third and fourth pipes (56, 58) in the energy storage mode, and configured to allow a flow of air in the third and fourth pipes (56, 58) and to prevent a flow of air in the first and second pipes (48, 52) in the energy release mode.

6. System according to any one of claims 2 to 5, further comprising a photovoltaic solar sensor (41) electrically supplying the air dehumidifier (37) constituting the dehumidification device (36), in the energy storage mode.

7. System according to claim 1, further comprising a return pipe (70) connecting the air outlet (18) of the chamber (14) to the air inlet (16) of the chamber (14) of the thermochemical reactor (12), an inlet pipe (72) that connects the air inlet (16) of the chamber (14) to an external environment (O), an outlet pipe (74) that connects the air outlet (18) of the chamber (14) to the external environment (O), and an aeraulic switching device (76) configured to allow a flow of air in a loop in the chamber (14) and the return pipe (70) and to prevent a flow of air in the inlet pipe (72) and the outlet pipe (74) in the energy storage mode, and configured to allow a flow of air in the inlet pipe (72) and the outlet pipe (74) and to prevent a flow of air in the return pipe (70) in the energy release mode,
the system comprising, connected in series so as to implement a refrigeration cycle: a compressor (80) supplied with electrical energy by the thermal energy capture device (22); an exchanger-condenser (82) arranged in the chamber (14) of the thermochemical reactor between the air inlet (16) of the chamber and the bed of reactive material (24) and constituting the first energy transfer device (21); an exchanger-evaporator (84) arranged in the chamber (14) of the thermochemical reactor between the second energy transfer device (27) and the air outlet (18) of the chamber and constituting the dehumidification device (36); and a pressure reducer (86), and
the system comprising a water discharge device (90) configured to allow liquid water, formed by condensation of water vapour of the air flow (AF) in contact with the exchanger-evaporator (84), to leave the chamber (14).

8. Method for implementing a system (10) according to claim 1, the method comprising at least one energy storage phase comprising at least steps of:
A) reducing a water-vapour content of a flow of air (AF) by means of the dehumidification device (36); then
C) contributing thermal energy to the bed of reactive material (24) from energy supplied by the thermal energy capture device (22) by means of the first energy transfer device (21), and passing the flow of air (AF) through the bed of reactive material (24), so that a reversible endothermic reaction of dehydration of the reactive material takes place, resulting in an enrichment of the flow of air (AF) with water vapour.

9. Method according to claim 8, wherein the dehumidification device (36) is an air dehumidifier (37) separated from the chamber (14) of the thermochemical reactor (12), the method comprising a step B of admitting the flow of air (AF) into the chamber (14) of the thermochemical reactor (12) through the air inlet (16) of the chamber after the step A and before the step C, and the method comprising, after the step C, a step D of discharging the flow of air (AF) out of the chamber (14) of the thermochemical reactor through the air outlet (18) of the chamber.

10. Method according to claim 9, wherein the chamber (14) of the thermochemical reactor and the air dehumidifier (37) are housed in a same room (38) in which the air inlet (16) of the chamber emerges, the room (38) comprising an air inlet (40) emerging in an external environment (O), the flow of air (AF) being admitted through an air inlet (54) of the air dehumidifier (37) directly from the room (38), and the flow of air (AF) being discharged through an air outlet (50) of the air dehumidifier (37) directly into the room (38), during the step A, and the flow of air (AF) being admitted through the air inlet (16) of the chamber (14) of the thermochemical reactor directly from the room (38), during the step B.

11. Method according to claim 10, wherein the flow of air (AF) is discharged out of the chamber (14) of the thermochemical reactor directly into the external environment (O), during the step D.

12. Method according to claim 9, wherein the flow of air (AF) passed through the air dehumidifier (37) at the step A is discharged into a first pipe (48) connected to the air inlet (16) of the chamber (14) of the thermochemical reactor through which the flow of air (AF) is admitted into the chamber (14) of the thermochemical reactor, at the step B, and
wherein the step D comprises the discharge of the flow of air (AF) from the air outlet (18) of the chamber (14) of the thermochemical reactor in a second pipe (52) connected to an air inlet (54) of the air dehumidifier (37) through which the flow of air (AF) is admitted into the air dehumidifier, at the step A.

13. Method according to any one of claims 8 to 12, wherein the dehumidification device (36) is supplied with electrical energy from a photovoltaic solar sensor (41).

14. Method according to claim 8, wherein the system (10) comprises a return pipe (70) connecting the air outlet (18) of the chamber (14) to the air inlet (16) of the chamber (14), an inlet pipe (72) that connects the air inlet (16) of the chamber (14) to an external environment (O), an outlet pipe (74) that connects the air outlet (18) of the chamber (14) to the external environment (O), and an aeraulic switching device (76) configured to allow a flow of air in a loop in the chamber (14) and the return pipe (70) and to prevent a flow of air in the inlet pipe (72) and the outlet pipe (74) in the energy storage mode, and configured to allow a flow of air in the inlet pipe (72) and the outlet pipe (74) in the energy storage mode and to prevent a flow of air in the return pipe (70) in the energy release mode,
wherein the system comprises, connected in series so as to implement a refrigeration cycle: a compressor (80) supplied with the electrical energy by the thermal energy capture device (22), an exchanger-condenser (82) arranged in the chamber (14) of the thermochemical reactor between the air inlet (16) of the chamber and the bed of reactive material (24), and constituting the first energy transfer device (21); an exchanger-evaporator (84) arranged in the chamber (14) of the thermochemical reactor between the second energy transfer device (27) and the air outlet (18) of the chamber, and constituting said dehumidification device (36), and a pressure reducer (86),
and wherein the step A is implemented by condensation of water vapour of the flow of air (AF) on the exchanger-evaporator (84), and the step C includes a transfer of heat to the flow of air (AF) from the exchanger-condenser (82) and then a transfer of heat from the flow of air (AF) to the bed of reactive material (24).
